(19) **Europäisches Patentamt European Patent Office Office européen des brevets**

(11) **EP 4 679 883 A1**

(12) **EUROPEAN PATENT APPLICATION**
published in accordance with Art. 153(4) EPC

(43) Date of publication:
**14.01.2026 Bulletin 2026/03**

(21) Application number: **24803650.1**

(22) Date of filing: **02.05.2024**

(51) International Patent Classification (IPC):
**H04W 24/10** (2009.01)    **H04L 41/5067** (2022.01)
**H04W 8/24** (2009.01)    **H04W 76/15** (2018.01)

(52) Cooperative Patent Classification (CPC):
**H04L 41/5067; H04W 8/24; H04W 24/10; H04W 76/15**

(86) International application number:
**PCT/KR2024/005946**

(87) International publication number:
**WO 2024/232596 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 KR 20230061004**

(71) Applicant: **Samsung Electronics Co., Ltd.**
**Suwon-si, Gyeonggi-do 16677 (KR)**

(72) Inventors:
• **JEONG, Seungbeom**
  **Suwon-si, Gyeonggi-do 16677 (KR)**
• **JUNG, Sangyeob**
  **Suwon-si, Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR MEASUREMENT OF QOE OF DUAL-CONNECTIVITY TERMINAL IN NEXT GENERATION MOBILE COMMUNICATION SYSTEM**

(57) The present disclosure relates to a communication technique for merging an IoT technology with a 5G communication system for supporting a higher data transmission rate than a 4G system, and a system therefor. The present disclosure can be applied to intelligent services (for example, smart homes, smart buildings, smart cities, smart cars or connected cars, healthcare, digital education, retail businesses, security- and safety-related services, and the like) on the basis of a 5G communication technology and an IoT-related technology. The present disclosure discloses a method and an apparatus for configuring QoE measurement with respect to a terminal in a next generation mobile communication system.

FIG. 1

**Description**

**[Technical Field]**

The disclosure relates to a method and device for configuring quality of experience (QoE) measurement for a user equipment (UE) in a next generation mobile communication system.

**[Background Art]**

To meet the increasing demand for wireless data traffic since the commercialization of a 4-th generation (4G) communication system, efforts are being made to develop an improved 5-th generation (5G) communication system or a pre-5G communication system. For this reason, the 5G communication system or the pre-5G communication system is also called a beyond 4G network communication system or a post long-term evolution (LTE) system. To achieve a high data transmission rate, the 5G communication system is being considered for implementation in a mmWave band (e.g., 60 gigahertz (GHz) band). To mitigate a pathloss of radio waves and to increase a propagation distance of radio waves in an ultra-high frequency band, beamforming, massive multiple input multiple output (MIMO), full dimensional multiple input multiple output (FD-MIMO), array antenna, analog beamforming, and large scale antenna technologies are being discussed in the 5G communication system. Also, to improve a system network, in the 5G communication system, an evolved small cell, an advanced small cell, a cloud radio access network (cloud RAN), an ultra-dense network, device to device communication (D2D), wireless backhaul, moving network, cooperative communication, coordinated multi-points (CoMP), and reception interference cancellation, etc. are being developed. In addition, in the 5G system, advanced coding modulation (ACM) methods such as hybrid frequency shift keying and quadrature amplitude modulation (FQAM) and sliding window superposition coding (SWSC), and advanced access technologies such as filter bank multi carrier (FBMC), non-orthogonal multiple access (NOMA), and sparse code multiple access (SCMA), etc. are being developed.

Meanwhile, the Internet is evolving from a human-centered connection network in which humans generate and consume information to an Internet of things (IoT) network in which information is exchanged and processed between distributed components such as objects. Internet of everything (IoE) technology in which bigdata processing technology is combined with IoT technology through connection to a cloud server is also emerging. To implement IoT, technological elements such as sensing technology, wired/wireless communication and network infrastructure, service interface technology, and security technology are being required, and currently, technologies such as a sensor network for connection between objects, machine to machine (M2M), and machine type communication (MTC) are being studied. In an IoT environment, intelligent Internet technology (IT) services may be provided that collect and analyze data generated from connected objects to create a new value in human life. IoT may be applied to fields, such as a smart home, a smart building, a smart city, a smart car or a connected car, a smart grid, healthcare, smart home appliances, and an advanced medical service, through convergence and integration between information technology (IT) and various industries.

Therefore, various attempts are being made to apply the 5G communication system to the IoT network. For example, technologies such as a sensor network, machine to machine (M2M), and machine type communication (MTC) are being implemented using 5G communication technology such as beamforming, MIMO, and array antenna techniques. Applying a cloud radio access network (cloud RAN) as bigdata processing technology described above may be an example of the convergence of 5G technology and IoT technology.

Meanwhile, an operator may utilize a measurement report on quality of experience (QoE) for network optimization. A user equipment (UE) may perform a measurement and measurement reporting on QoE based on measurement configuration for QoE. Here, measurement configuration for QoE may be activated in such a manner that operations, administration, and maintenance (OAM) or a core network (CN) provides measurement configuration for QoE to a base station.

**[Disclosure of Invention]**

**[Technical Problem]**

One objective of the disclosure is to provide a method and device for performing measurement configuration for measurement reporting on quality of experience (QoE) to a user equipment (UE) in a standalone (SA) or dual connectivity (DC) situation.

Also, one objective of the disclosure is to provide a method and device that allows an enhanced reduced capability (eRedCap) UE to report capability information.

**[Solution to Problem]**

A method performed by a terminal in a wireless communication system according to an example of the disclosure to solve the above-described problems may include receiving, from a master cell group (MCG) or a secondary cell group (SCG) configured with dual connectivity (DC) for the UE, a radio resource control (RRC) message including configuration information on an application layer measurement, wherein the configuration information includes first information on an identity (ID) for identifying each of a plurality of quality of experience (QoE) measurements and second information on a signaling radio bearer (SRB) to transmit a QoE report of a measurement corresponding to each ID, and the second information indicates an SRB 4 for the MCG or an SRB 5 for the SCG; performing a report for the plurality of QoE measurements based on the configuration information; receiving, from the MCG, information indicating a release of the SCG; and discarding at least one QoE report that has not been transmitted among QoE reports generated for the plurality of QoE measurements, based on the release of the SCG, and the at least one QoE report may be configured to be transmitted through the SRB 5.

Also, a terminal in a wireless communication system according to an example of the disclosure may include a transceiver; and a controller configured to control the transceiver to receive, from a master cell group (MCG) or a secondary cell group (SCG) configured with dual connectivity (DC) for the UE, a radio resource control (RRC) message including configuration information on an application layer measurement, wherein the configuration information includes first information on an identity (ID) for identifying each of a plurality of quality of experience (QoE) measurements and second information on a signaling radio bearer (SRB) to transmit a QoE report of a measurement corresponding to each ID, and the second information indicates an SRB 4 for the MCG or an SRB 5 for the SCG, perform a report for the plurality of QoE measurements based on the configuration information, control the transceiver to receive, from the MCG, information indicating a release of the SCG, and discard at least one QoE report that has not been transmitted among QoE reports generated for the plurality of QoE measurements, based on the release of the SCG, wherein the at least one QoE report is configured to be transmitted through the SRB 5.

**[Advantageous Effects of Invention]**

According to an embodiment of the disclosure, it is possible to control an operations, such as quality of experience (QoE) measurement, measurement reporting, and pausing of measurement reporting of a dual connected user equipment (UE).

Also, according to an embodiment of the disclosure, it is possible to define a method for an enhanced reduced capability (eRedCap) UE to indicate the capability of the eRedCap UE through a random access procedure or a UE capability message.

**[Brief Description of Drawings]**

FIG. 1 illustrates a structure of a next generation mobile communication system.

FIG. 2 is a diagram for describing a radio access state transition in a next generation mobile communication system.

FIG. 3 is a flowchart illustrating a procedure of configuring/reporting a signaling-based quality of experience (QoE) measurement in an example of the disclosure.

FIG. 4 is a flowchart illustrating a procedure of configuring/reporting a management-based QoE measurement in an example of the disclosure.

FIG. 5 is a flowchart illustrating a procedure of configuring and reporting a radio access network (RAN) visible QoE measurement according to an example of the disclosure.

FIG. 6 is a diagram illustrating a signaling radio bearer (SRB) path in a standalone (SA) situation according to an example of the disclosure.

FIG. 7 is a diagram illustrating an SRB path in a dual connectivity (DC) situation according to an example of the disclosure.

FIG. 8 illustrates an example of a downlink and uplink channel frame structure when performing beam-based communication in a new radio (NR) system according to an example of the disclosure.

FIG. 9 illustrates a contention-based four-stage-random access procedure performed by a user equipment (UE) in various cases in which a random access to a base station is required according to an example of the disclosure.

FIG. 10 is a block diagram illustrating an internal structure of a UE applied to examples of the disclosure.

FIG. 11 is a block diagram illustrating a structure of a base station applied to examples of the disclosure.

## [Mode for the Invention]

In describing the present invention below, when it is determined that detailed description of a relevant known function or configuration may unnecessarily obscure the gist of the present invention, the detailed description will be omitted. Hereinafter, embodiments of the present invention are descried with reference to the accompanying drawings.

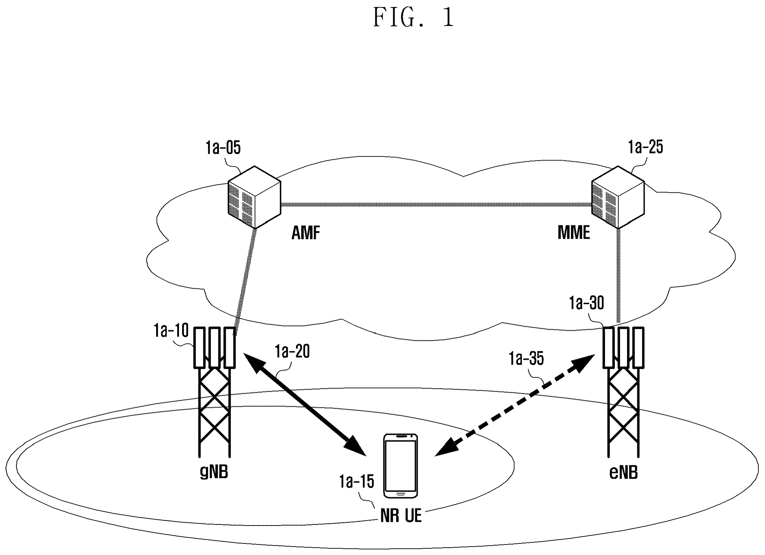

FIG. 1 illustrates a structure of a next generation mobile communication system.

With reference to FIG. 1, as illustrated, a radio access network of the next generation mobile communication system (new radio (NR)) includes a next generation base station (new radio node B, hereinafter, gNB) 1a-10 and an access and mobility management function (AMF) (new radio core network) 1a-05. A user equipment (new radio user equipment, hereinafter, NR UE or UE) 1a-15 accesses an external network through the gNB 1a-10 and the AMF 1a-05.

In FIG. 1, the gNB corresponds to an evolved node B in existing long term evolution (LTE) system. The gNB may be connected to the NR UE through a wireless channel, and may provide more excellent services than the existing node B (1a-20). In the next generation mobile communication system, all user traffic is serviced through a shared channel, so there is a need for a device that performs scheduling by collecting status information, such as buffer status, available transmit power status, and channel status of UEs, for which the gNB 1a-10 is responsible. A single gNB typically controls a plurality of cells. To implement ultra-high speed data transmission compared to the existing LTE, beamforming technology may be additionally integrated by having the existing maximum bandwidth or more and by using orthogonal frequency division multiplexing (OFDM) as radio access technology. Also, applied is an adaptive modulation & coding (AMC) scheme that determines a modulation scheme and a channel coding rate according to the channel status of a UE.

The AMF 1a-05 may performs functions, such as mobility support, bearer configuration, and quality of service (QoS) configuration. The AMF refers to a device that is responsible for various types of control functions in addition to a mobility management function for a UE, and is connected to a plurality of base stations. Also, the next generation mobile communication system may interwork with the existing long term evolution (LTE) system, and the AMF is connected to a mobility management entity (MME) 1a-25 through a network interface. The MME is connected to eNB 1a-30 that is the existing base station. A UE that supports LTE-NR dual connectivity may transmit and receive data while maintaining connection to not only the gNB but also the eNB (1a-35).

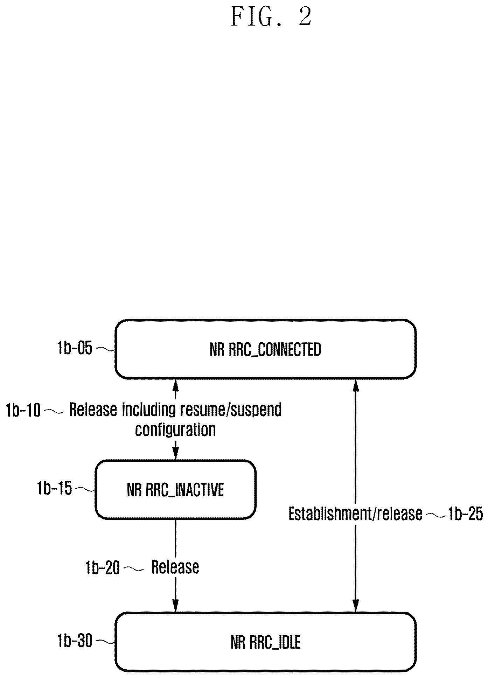

FIG. 2 is a diagram for describing a radio access state transition in a next generation mobile communication system.

The next generation mobile communication system has three radio access states (radio resource control (RRC) states). A connected mode (RRC_CONNECTED) 1b-05 is a radio access state in which a UE may transmit and receive data. An idle mode (RRC_IDLE) 1b-30 is a radio access state in which the UE monitors whether paging is transmitted to the UE. The two modes are radio access states applied even to the existing LTE system, and the detailed technologies are the same as those of the existing LTE system.

In the next generation mobile communication system, a new inactive (RRC_INACTIVE) radio access state 1b-15 is defined. In the radio access state, UE context is maintained in a base station and the UE, and radio access network (RAN)-based paging is supported. Features of the new radio access state are listed as follows:

- Cell re-selection mobility;

- CN - NR RAN connection (both C/U-planes) has been established for UE;

- The UE AS context is stored in at least one gNB and the UE;

- Paging is initiated by NR RAN;

- RAN-based notification area is managed by NR RAN;

- NR RAN knows the RAN-based notification area which the UE belongs to;

The new INACTIVE radio access state may transition to the connected mode or the idle mode using a specific procedure. Transition from the INACTIVE mode to the connected mode is performed according to a resume process, and transition from the connected mode to the INACTIVE mode is performed using a release procedure that includes suspend configuration information. The procedure is performed in such a manner that least one RRC message is transmitted and received between the UE and the base station, and is configured with at least one stage. Also, through the release procedure after resume, transition from the INACTIVE mode to the idle mode is possible (1b-20). Transition between the connected mode and the idle mode follows the existing LTE technology. That is, through establishment or release procedure, transition between the modes is performed (1b-25).

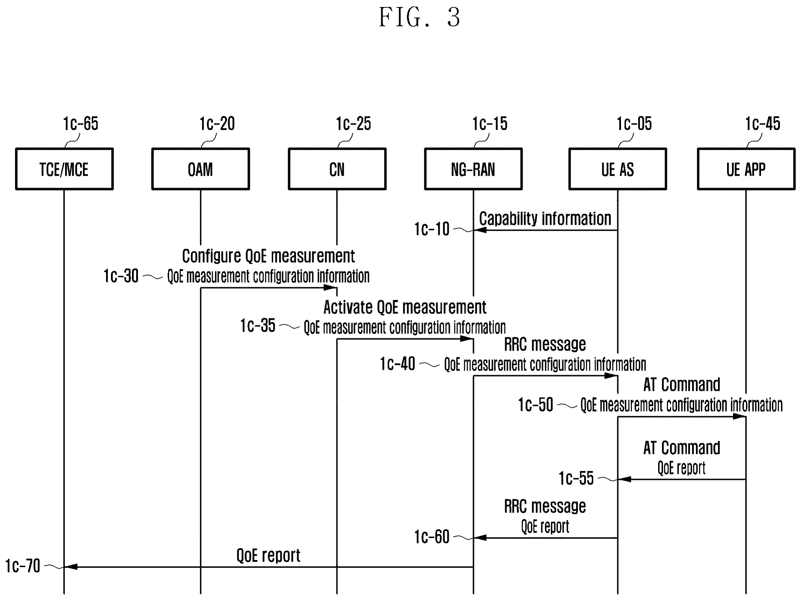

FIG. 3 is a flowchart illustrating a procedure of configuring/reporting a signaling-based QoE measurement in an example of the disclosure.

A UE access stratum (AE) 1c-05 may transmit information (e.g., qoe-Streaming-MeasReport, qoe-MTSI-MeasReport, qoe-VR-MeasReport) indicating whether quality of experience (QoE) measurement is supported for each service type (e.g., streaming, MTSI, VR) to a base station (or NG-RAN 1c-15) through a UE capability message (e.g., UECapabilityInformation) (1c-10). Before transmitting the UE capability message, the base station may transmit a message for requesting a UE capability message (e.g., UECapabilityEnquiry). Also, the UE may report to the base station about whether a RAN visible QoE measurement is supported for each service type (e.g., streaming, VR) (e.g., ran-VisibleQoE-Streaming-MeasReport, ran-VisibleQoE-VR-MeasReport), through the UE capability message. Also, the UE may report to the base station about whether uplink (UL) radio resource control (RRC) segmentation for the QoE report message is supported (e.g., ul-MeasurementReportAppLayer-Seg), through the UE capability message. The UE capability message contains ASN.1 information as shown [Table 1] below, and the description of related parameters is as shown in [Table 2] below.

[Table 1]

```
QoE-Parameters-r17 ::=                  SEQUENCE {
    qoe-Streaming-MeasReport-r17            ENUMERATED {supported}
                OPTIONAL,
    qoe-MTSI-MeasReport-r17                 ENUMERATED {supported}
                OPTIONAL,
    qoe-VR-MeasReport-r17                   ENUMERATED {supported}
                OPTIONAL,
```

```
    ran-VisibleQoE-Streaming-MeasReport-r17   ENUMERATED {supported}
                OPTIONAL,
    ran-VisibleQoE-VR-MeasReport-r17        ENUMERATED {supported}
                OPTIONAL,
    ul-MeasurementReportAppLayer-Seg-r17    ENUMERATED {supported}
                OPTIONAL,
    ...}
```

[Table 2]

| 4.2.20 QoE measurement parameters | | | | |
|---|---|---|---|---|
| **Definitions for parameters** | **Per** | **M** | **FDD -TD D D IFF** | **FR1-FR2 DIFF** |
| *qoe-Streaming-MeasReport-r17* | UE | No | No | No |
| Indicates whether the UE supports NR Q□E Measurement Collect ion for streaming services, see TS 26.247 [29]. | | | | |
| *qoe-MTSI-MeasReport-r17* | UE | No | No | No |
| Indicates whether the UE supports NR QoE Measurement Collect ion for MTSI services, see TS 26.114 [30]. | | | | |
| *qoe-VR-MeasReport-r17* | UE | No | No | No |
| Indicates whether the UE supports NR QoE Measurement Collect ion for VR services, see TS 26.118 [31]. | | | | |
| *ran-VisibleQoE-Streaming-MeasReport-r17* | UE | No | No | No |
| Indicates whether the UE supports RAN visible QoE Measurement Collection for streaming services. | | | | |
| *ran-VisibleQoE-VR-MeasReport-r17* | UE | No | No | No |

(continued)

| 4.2.20 QoE measurement parameters | | | | |
| Definitions for parameters | Per | M | FDD -TD D D IFF | FR1-FR2 DIFF |
| Indicates whether the UE supports RAN visible QoE Measurement Collection for VR services. | | | | |
| *ul-MeasurementReportAppLayer-Seg-r17* | UE | No | No | No |
| Indicates whether the UE supports RRC segmentation of the Me asurementReportAppLayer message in UL, as specified in TS 38. 331 [9]. | | | | |

Types of services that may be supported in LTE may include streaming and Multimedia Telephony Service for IMS (IP Multimedia Subsystem (MTSI)), and in the case of NR, in addition thereto, it is defined in Rel-17 that a virtual reality (VR) service is supported, and it is defined in subsequent release that services, such as Multimedia Broadcast Multicast Services (MBMS) and extended reality (XR) may be additionally supported.

Operations, administration, and maintenance (OAM) 1c-20 provides QoE measurement configuration information to a core network (CN) 1c-25 (1c-30). The CN 1c-25 that receives the configuration information may activate QoE measurement by transmitting the configuration information to the base station 1c-15 (1c-35).

The base station 1c-15 that receives the configuration information from the CN 1c-25 may deliver the QoE configuration information to the UE AS 1c-05 through an RRC message (e.g., RRCReconfiguration or RRCResume message) (1c-40). The RRC message may include information element (IE) IE (APPLayerMeasConfig) as shown in [Table 3] below and the description of related parameters is as shown in [Table 4] below.

[Table 3]

---

*AppLayerMeasConfig*

The IE *AppLayerMeasConfig* indicates configuration of application layer measurements.

**AppLayerMeasConfig information element**

```
AppLayerMeasConfig-r17 ::=            SEQUENCE {
    measConfigAppLayerToAddModList-r17  SEQUENCE (SIZE (1..maxNrofAppLayerMeas-r17)) OF
MeasConfigAppLayer-r17      OPTIONAL,
    measConfigAppLayerToReleaseList-r17  SEQUENCE (SIZE (1..maxNrofAppLayerMeas-r17)) OF
MeasConfigAppLayerId-r17    OPTIONAL,
    rrc-SegAllowed-r17                 ENUMERATED {enabled}
                           OPTIONAL,
    ...
}

MeasConfigAppLayer-r17 ::=            SEQUENCE {
    measConfigAppLayerId-r17               MeasConfigAppLayerId-r17,
    measConfigAppLayerContainer-r17        OCTET STRING (SIZE (1..8000))
                           OPTIONAL,
    serviceType-r17                        ENUMERATED {streaming, mtsi, vr, spare5, spare4
, spare3, spare2, spare1}    OPTIONAL,
    pauseReporting                         BOOLEAN
                           OPTIONAL,
    transmissionOfSessionStartStop         BOOLEAN
                           OPTIONAL,
    ran-VisibleParameters-r17              SetupRelease {RAN-VisibleParameters-r17}
                           OPTIONAL,
    ...
}

RAN-VisibleParameters-r17 ::=        SEQUENCE {
    ran-VisiblePeriodicity-r17             ENUMERATED {ms120, ms240, ms480, ms640, ms1024}
                           OPTIONAL,
    numberOfBufferLevelEntries-r17         INTEGER (1..8)
                           OPTIONAL,
    reportPlayoutDelayForMediaStartup-r17 BOOLEAN
                           OPTIONAL,
    ...
}
```

---

[Table 4]

---

| **AppLayerMeasConfig field descriptions** |
|---|
| **measConfigAppLayerContainer**<br>The field contains configuration of application layer measurements, see Annex L (normative) in TS 26.247 [68], clause 16.5 in TS 26.114 [69] and TS 26.118 [70]. |
| **pauseReporting**<br>The field indicates whether the transmission of *measReportAppLayerContainer* is paused or not. |

---

| |
|---|
| **ran-VisibleParameters**<br>The field indicates whether RAN visible application layer measurements shall be reported or not. The field is optionally present when *serviceType* is set to *streaming* or *vr*. Otherwise, it is absent. |
| **rrc-SegAllowed**<br>This field indicates that RRC segmentation of *MeasurementReportAppLayer* is allowed. It may be present only if the UE supports RRC segmentation of the *MeasurementReportAppLayer* message in UL. |
| **serviceType**<br>Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]). value vr indicates Quality of Experience Measurement Collection for VR service (see TS 26.118 [70]). The network always configures *serviceType* when application layer measurements are initially configured and at *fullConfig*. |
| **transmissionOfSessionStartStop**<br>The field indicates whether the UE shall transmit indications when sessions in the application layer start and stop. The UE transmits a session start indication upon configuration of this field if a session already has started in the application layer. |

| **RAN-VisibleParameters** field descriptions |
|---|
| **numberOfBufferLevelEntries**<br>The field contains the maximum number of buffer level entries that can be reported for RAN visible application layer measurements. |
| **ran-VisiblePeriodicity**<br>The field indicates the periodicity of RAN visible reporting. Value ms120 indicates 120 ms, value ms240 indicates 240 ms and so on. |
| **reportPlayoutDelayForMediaStartup**<br>The field indicates whether the UE shall report Playout Delay for Media Startup for RAN visible application layer measurements. |

Also, the operation of the UE AS 1c-05 that receives this may be performed as described in [Table 5] below.

[Table 5]

## 5.3.5.13d Application layer measurement configuration

The UE shall:

1> if *measConfigAppLayerToReleaseList* is included in *appLayerMeasConfig* within *RRCReconfiguration* or *RRCResume*:

2> for each *measConfigAppLayerId* value included in the *measConfigAppLayerToReleaseList*:

3> forward the *measConfigAppLayerId* and inform upper layers about the release of the application layer measurement configuration including any RAN visible application layer measurement configuration;

3> discard any application layer measurement report received from upper layers;

3> consider itself not to be configured to send application layer measurement report for the *measConfigAppLayerId*.

1> if *measConfigAppLayerToAddModList* is included in *appLayerMeasConfig* within *RRCReconfiguration* or *RRCResume*:

2> for each *measConfigAppLayerId* value included in the *measConfigAppLayerToAddModList*:

3> if *measConfigAppLayerContainer* is included for the corresponding *MeasConfigAppLayer* configuration:

4> forward the *measConfigAppLayerContainer*, the *measConfigAppLayerId* and the *serviceType* to upper layers considering the *serviceType*;

3> consider itself to be configured to send application layer measurement report for the *measConfigAppLayerId* in accordance with 5.7.16;

3> forward the *transmissionOfSessionStartStop*, if configured, and *measConfigAppLayerId* to upper layers considering the *serviceType*;

3> if *ran-VisibleParameters* is set to setup and the parameters have been received:

4> forward the *measConfigAppLayerId*, the *ran-VisiblePeriodicity*, if configured, the *numberOfBufferLevelEntries*, if configured, and the *reportPlayoutDelayForMediaStartup*, if configured, to upper layers considering the *serviceType*;

3> else if *ran-VisibleParameters* is set to release:

4> forward the *measConfigAppLayerId* and inform upper layers about the release of the RAN visible application layer measurement configuration;

3> if *pauseReporting* is set to *true*:

4> if at least one segment, but not all segments, of a segmented *MeasurementReportAppLayer* message containing an application layer measurement report associated with the *measConfigAppLayerId* has been submitted to lower layers for transmission:

5> submit the remaining segments of the *MeasurementReportAppLayer* message to lower layers for transmission;

4> suspend submitting application layer measurement report containers to lower layers for the application layer measurement configuration associated with the *measConfigAppLayerId*;

4> store any previously or subsequently received application layer measurement report containers associated with the *measConfigAppLayerId* for which no segment, or full message, has been submitted to lower layers for transmission;

3> else if *pauseReporting* is set to *false* and if transmission of application layer measurement report containers has previously been suspended for the application layer measurement configuration associated with the *measConfigAppLayerId*:

| | | |
|---|---|---|
| 4> | submit stored application layer measurement report containers to lower layers, if any, for the application layer measurements configuration associated with the *measConfigAppLayerId;* | |
| 4> | resume submitting application layer measurement report containers to lower layers for the application layer measurement configuration associated with the *measConfigAppLayerId;* | |
| NOTE 1: | The UE may discard reports when the memory reserved for storing application layer measurement reports becomes full. | |
| NOTE 2: | The transmission of RAN visible application layer measurement reports is not paused when *pauseReporting* is set to *true.* | |

As described above, in the case of QoE measurement configuration included in measConfigAppLayerToAddModList, the UE AS layer 1c-05 may deliver configuration information to the UE's upper layer or application layer (UE APP 1c-45) through AT command (1c-50). Also, the UE's AS layer 1c-05 may transmit, to the UE's APP 1c-45, AT command to discard the stored configuration information for the QoE measurement configuration included in measConfigAppLayerToAddReleaseList.

The UE App 1c-45 may perform a QoE measurement according to the received configuration information. Also, the UE APP 1c-45 may report the results of measurement according to the configuration information to the UE AS 1c-05 through the AT command (1c-55).

The UE AS 1c-05 that receives the same may report the measurement results to the base station 1c-15 through an RRC message (e.g., MeasurementReportAppLayer message) (1c-60). Here, signaling radio bearer (SRB) 4 may be used for the UE 1c-05 to transmit a QoE measurement result report to the base station 1c-15. The MeasurementReportAppLayer message may contain ASN.1 information as shown in [Table 6] below, and the description of related parameters is as shown in [Table 7] below.

[Table 6]

## MeasurementReportAppLayer

The *MeasurementReportAppLayer* message is used for sending application layer measurement report.

Signalling radio bearer: SRB4

RLC-SAP: AM

Logical channel: DCCH

Direction: UE to Network

**MeasurementReportAppLayer message**

```
MeasurementReportAppLayer-r17 ::=       SEQUENCE {
        criticalExtensions                      CHOICE {
            measurementReportAppLayer-r17    MeasurementReportAppLayer-r17-IEs,
            criticalExtensionsFuture             SEQUENCE {}
        }
}

MeasurementReportAppLayer-r17-IEs ::=   SEQUENCE {
        measurementReportAppLayerList-r17        MeasurementReportAppLayerList-r17,
        lateNonCriticalExtension                 OCTET STRING
                            OPTIONAL,
        nonCriticalExtension                     SEQUENCE{}
                            OPTIONAL
}

MeasurementReportAppLayerList-r17 ::= SEQUENCE (SIZE (1..maxNrofAppLayerMeas-r17)) OF Me
asReportAppLayer-r17

MeasReportAppLayer-r17 ::=           SEQUENCE {
        measConfigAppLayerId-r17                 MeasConfigAppLayerId-r17,
        measReportAppLayerContainer-r17          OCTET STRING
                            OPTIONAL,
        appLayerSessionStatus-r17                ENUMERATED {started, stopped}
                            OPTIONAL,
        ran-VisibleMeasurements-r17              RAN-VisibleMeasurements-r17
                            OPTIONAL
}

RAN-VisibleMeasurements-r17 ::=         SEQUENCE {
        appLayerBufferLevelList-r17              SEQUENCE (SIZE (1..8)) OF AppLayerBufferLevel-
r17                     OPTIONAL,
        playoutDelayForMediaStartup-r17      INTEGER (0..30000)
                            OPTIONAL,
        pdu-SessionIdList-r17                    SEQUENCE (SIZE (1..maxNrofPDU-Sessions-r17)) O
F PDU-SessionID         OPTIONAL,
        ...
}

AppLayerBufferLevel-r17 ::= INTEGER (0..30000)
```

[Table 7]

| **MeasurementReportAppLayer field descriptions** |
|---|
| **appLayerBufferLevelList**<br>The field indicates a list of application layer buffer levels, and each *AppLayerBufferLevel* indicates the application layer buffer level in ms. Value 0 corresponds to 0ms, value 1 corresponds to 10ms , value 2 corresponds to 20 ms and so on. If the buffer level is larger than the maximum value of 30000 (5 minutes), the UE reports 30000. |

(continued)

| |
|---|
| **appLayerSessionStatus** |
| Indicates that an application laver measurement session in the application layer starts or ends. |
| **playoutDelayForMediaStartup** |
| Indicates the application layer playout delay for media start-up in ms. Value 0 corresponds to 0ms , value 1 corresponds to 1ms, value 2 corresponds to 2 ms and so on. If the playout delay for m edia start-up is larger than the maximum value of 30000ms, the UE reports 30000. |
| **measReportAppLayerContainer** |
| The field contains application layer measurement report, see Annex L (normative) in TS 26.247 [6 8], clause 16.5 in TS 26.114 [69] and TS 26.118 [70]. |
| **pdu-SessionIdList** |
| Contains the identity of the PDU session, or the identities of the PDU sessions, used for applicati on data flows subject to the RAN visible application layer measurements. |

Also, a detailed procedure of the UE AS 1c-05 that reports the measurement results may follow the operation described in [Table 8] below.

[Table 8]

## 5.7.16 Application layer measurement reporting

### 5.7.16.1 General

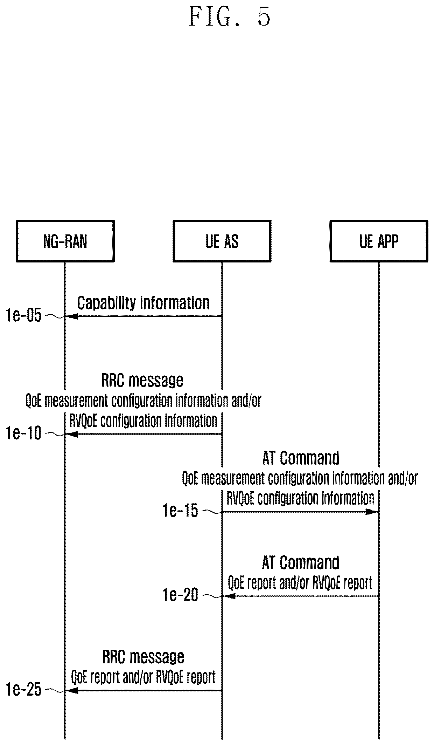

**Figure 5.7.16.1-1: Application layer measurement reporting**

The purpose of this procedure is to send application layer measurement reports to the network.

### 5.7.16.2 Initiation

A UE capable of application layer measurement reporting in RRC_CONNECTED may initiate the procedure when configured with application layer measurement, i.e. when *appLayerMeasConfig* and SRB4 have been configured by the network.

Upon initiating the procedure, the UE shall:

1> for each *measConfigAppLayerId*:

2> if the UE AS has received application layer measurement report from upper layers which has not been transmitted; and

2> if the application layer measurement reporting has not been suspended for the *measConfig AppLayerId* associated with the application layer measurement report according to clause 5.3.5.13d:

3> set the *measReportAppLayerContainer* in the *MeasurementReportAppLayer* message to the received value in the application layer measurement report;

2> set the *measConfigAppLayerId* in the *MeasurementReportAppLayer* message to the value of the *measConfigAppLayerId* received together with application layer measurement report information;

2> if session start or stop information has been received from upper layers for the *measConfigAppLayerId*:

3> set the *appLayerSessionStatus* to the received value of the application layer measurement information;

2> if RAN visible application layer measurement report has been received from upper layers:

3> for each *appLayerBufferLevel* value in the received RAN visible application layer measurement report:

4> set the *appLayerBufferLevel* values in the *appLayerBufferLevelList* to the buffer level values received from the upper layer in the order with the first *appLayerBufferLevel* value set to the newest received buffer level value, the second *appLayerBuffer Level* value set to the second newest received buffer level value, and so on until all the buffer level values received from the upper layer have been assigned or the

maximum number of values have been set according to *appLayerBufferLevel*, if configured;

   3> set the *playoutDelayForMediaStartup* to the received value in the RAN visible application layer measurement report, if any;

   3> for each PDU session ID value indicated in the received RAN visible application layer measurement report, if any:

      4> set the *PDU-SessionID* field in the *pdu-SessionIdList* to the indicated PDU session ID value;

2> if the encoded RRC message is larger than the maximum supported size of one PDCP SDU specified in TS 38.323 [5]:

   3> if the RRC message segmentation is enabled based on the field *rrc-SegAllowed* received in *appLayerMeasConfig*:

      4> initiate the UL message segment transfer procedure as specified in clause 5.7.7;

   3> else:

      4> discard the RRC message;

2> else:

   3> submit the *MeasurementReportAppLayer* message to lower layers for transmission upon which the procedure ends.

The base station 1c-15 may deliver the measurement result report to a final server (trace collection entity (TCE) or measurement collection entity (MCE) 1c-65) that collects the measurement report (1c-70).

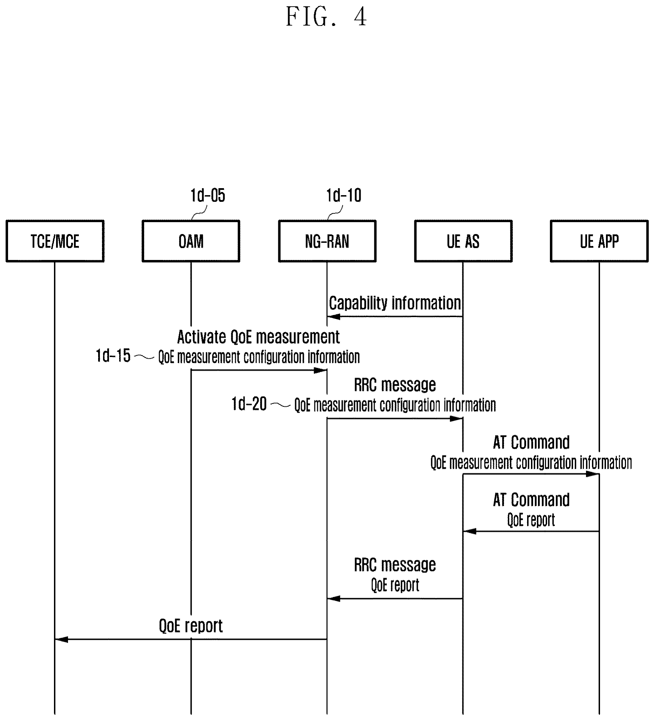

FIG. 4 is a flowchart illustrating a procedure of configuring/reporting a management-based QoE measurement in an example of the disclosure.

A management-based QoE configuration/reporting procedure is largely similar to the signaling-based procedure described above in FIG. 3. Therefore, only the difference from the signaling-based procedure is described in this drawing, and procedure and description that overlaps with the description of FIG. 3 will be omitted.

In the management-based scheme, QoE measurement may be activated in such a manner that an OAM 1d-05 directly transmits QoE measurement configuration to a base station 1d-10 without going through a CN (1d-15). The base station 1d-10 that receives this searches for a single UE or a plurality of UEs that meet various conditions (e.g., area scope, application layer capability, service type). The base station 1d-10 may transmit QoE measurement configuration to each of the UEs through an RRC message (e.g., RRCReconfiguration message or RRCResume) (1d-20).

Each UE that receives the RRC message may exchange configuration and measurement results for the QoE measurement through AT command between an AS layer and an APP as described above in FIG. 3. The UE's AS layer may report measurement results acquired from the APP to the base station 1d-10 through the RRC message, and the base station 1d-10 may deliver the same to a TCE/MCE.

FIG. 5 is a flowchart illustrating a procedure of configuring and reporting a RAN visible QoE measurement according to an example of the disclosure.

In the case of following the methods described in FIGS. 3 and 4, QoE measurement may be configured by OAM, a QoE measurement report generated according to the corresponding configuration may be collected by a TCE/MCE, and the QoE measurement report may be used by an operator for network optimization. Meanwhile, a base station may not read or understand a report on the OAM-based QoE measurement transmitted from a UE. In more detail, the MeasurementReportAppLayer message includes a measurement report generated by the UE's application layer in measurementReportAppLayerContainer, but is stored in an OCTET STRING format, which may not be read or understood by the base station or the base station's RRC layer. To solve this problem, that is, to allow the base station to read the QoE measurement report and to utilize the same for network optimization, such as radio management, 3GPP defined and introduced RAN visible QoE (RVQoE) measurement.

The RVQoE measurement may be limited and defined by a specific service type (e.g., streaming, VR). Initially, the UE may report to the base station about whether to support RVQoE measurement for each service type (e.g., streaming, VR) (1e-05). Here, a UECapabilityInformation message may be used. For example, the UE may include or configure a ran-VisibleQoE-Streaming-MeasReport parameter within the UECapabilityInformation message for a streaming service and may transmit the same to the base station, and may include or configure a ran-VisibleQoE-VR-MeasReport parameter within the UECapabilityInformation message for a VR service and may transmit the same to the base station.

Through this, the base station may identify whether to support RVQoE measurement for each service type of the UE, and based on this, may generate RVQoE measurement configuration and then transmit the same to the UE (1e-10). Here, the RVQoE measurement configuration may be delivered with OAM-based QoE measurement configuration. The RVQoE measurement configuration may be included in an RRCReconfiguration or RRCResume message. The base station may instruct the UE to set up or release RVQoE measurement through setup or release of the ran-VisibleParameters parameter within an AppLayerMeasConfig IE. The parameter may include the RAN-VisibleParameters IE and, through this, a portion or all of the following parameters may be provided from the base station to the UE.

- RVQoE measurement report periodicity (ran-VisiblePeriodicity): The UE AS or the UE APP may transmit an RVQoE measurement report every periodicity.

- Maximum number of reportable buffer levels (numberOfBufferLevelEntries): The UE AS or the UE APP may include a plurality of buffer levels when performing RVQoE measurement reporting and, here, may include the number of buffer levels less than or equal to the setup value.

- Report status of playout delay when media starts (reportPlayoutDelayForMediaStartup): If the value is indicated as true, the UE AS or the UE APP may include playout delay in the RVQoE report when media starts and may transmit the same. If the value is indicated as false, the UE may not include the playout delay in the RVQoE report when media starts.

The UE's AS layer may deliver such configuration information to the UE's APP layer (1e-15). Here, the RVQoE measurement configuration may be delivered together with OAM-based QoE measurement configuration. The UE's APP may generate the RVQoE measurement report by performing QoE measurement based on the RVQoE measurement configuration information and may transmit the same to the UE's AS layer (1e-20). Here, the RVQoE measurement report may be delivered together with the OAM-based QoE measurement report.

The UE's AS layer that receives the same may deliver the delivered RVQoE measurement report to the base station (1e-25). Here, the RVQoE measurement report may be delivered together with the OAM-based QoE measurement report. In 1e-25, the RVQoE measurement report may be delivered with a RAN-VisibleMeasurements IE within the MeasurementReportAppLayer message, and the IE may include some or all of the following parameters.

- Buffer level list of APP layer (appLayerBufferLevelList): This may include a plurality of buffer levels measured by the UE APP. The number of buffer levels included may be limited by numberOfBufferLevelEntries in the RVQoE configuration.

- Playout delay (playoutDelayForMediaStartup): This may indicate a playout delay in units of ms when media starts. The UE may include this parameter if reportPlayoutDelayForMediaStartup in RVQoE configuration is set to true.

- PDU session ID list (pdu-SessionIdList): This may indicate PDU session(s) used in an application data flow that is a target of RVQoE measurement. Through this, the base station may be aware of for which PDU session(s) the RVQoE values (e.g., buffer level and playout delay) are measured and may optimize resource allocation and scheduling for the corresponding PDU session(s) accordingly.

The base station may read the RVQoE report and may perform network optimization using the same. For example, if the base station determines that a specific UE is experiencing poor QoE for a specific service based on the RVQoE report, QoE of the corresponding UE may be enhanced by allocating more radio resources to the UE.

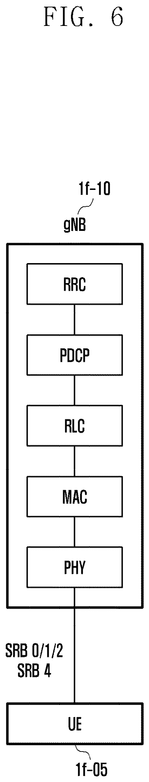

FIG. 6 is a diagram illustrating a signaling radio bearer (SRB) path in a standalone (SA) situation according to an example of the disclosure.

A UE may be connected to a network in a standalone (SA) state. That is, a UE 1f-05 may communicate with a single base station 1f-10. Here, a signaling radio bearer (SRB) may be defined/used for RRC message or non-access stratum (NAS) message transmission between the base station and the UE. In the SA state, for example, SRB0, SRB1, SRB2, and SRB4 may be configured/used. Here, SRB4 may be used for QoE measurement report message (or App layer measurement report message) transmission of the UE.

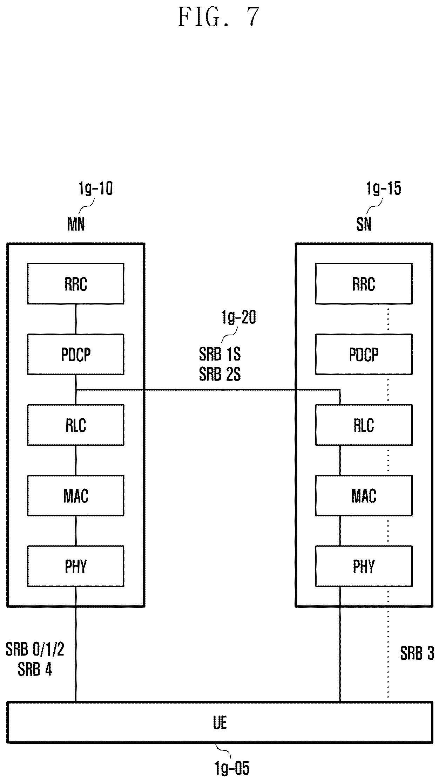

FIG. 7 is a diagram illustrating an SRB path in a dual connectivity (DC) situation according to an example of the disclosure.

A UE may be connected to a network in a dual connectivity (DC) (e.g., NR-DC) state. That is, a UE 1g-05 may establish a connection with each of two base stations 1g-10 and 1g-15 and may simultaneously communicate with the two base stations. The base stations may be referred to as a master node (MN) 1g-10 and a secondary node (SN) 1g-15, respectively. Here, a signaling radio bearer (SRB) may be defined/used for RRC message or NAS message transmission between the base station and the UE. Here, SRB0, SRB1, SRB2, and SRB4 may be configured/used for communication between the UE and the MN. Also, SRB4 may be used for QoE measurement report message (or App layer measurement report message) transmission of the UE. Among them, SRB1 and SRB2 may be configured as a split SRB 1g-20, and the split SRB may support communication between the UE and the MN through RRC/packet data convergence protocol (PDCP) layers of the MN and radio link control (RLC)/medium access control (MAC)/PHY layers of the SN. The base station may establish an SRB path for communication with the UE using the split SRB. For example, the base station may configure the UE to use the RLC/MAC/PHY layers of the MN, to use the RLC/MAC/PHY layers of the SN, or to use both. In the case of using all of the RLC/MAC/PHY layers of each of the MN and the SN (duplication), reliability of the transmission may be improved through duplicate transmission of packets. Meanwhile, SRB3 may be configured/used for communication between the UE and the SN.

In 3GPP Release 18 QoE Work Item Description ((WID), RP-221803), to support QoE measurement in an NR-DC state, the content as shown in [Table 9] below is described.

[Table 9]

| |
|---|
| • Specify to support for QoE in NR-DC, e.g. enable QoE reporting via SN [RAN3, RAN2].<br>    - Specify the QoE configuration, and measurement reporting over MN/SN for NR-DC architecture, and specify the QoE measurement reporting over the other DC leg in order to maintain the reporting continuity.<br>    Note 1: The QoE measurements are not performed separately for each leg.<br>    - Support RAN-visible QoE and radio related measurement configuration and reporting in NR-DC scenarios.<br>    - Specify the QoE measurement continuity in mobility scenarios in NR-DC.<br>    - Specify the alignment of QoE measurements (including legacy QoE and RAN visible QoE measurements) and radio related measurement in NR-DC. |

Therefore, a 3GPP RAN2 working group and a 3GPP RAN3 working group are discussing, and have reached an agreement as shown in [Table 10] below regarding QoE measurement reporting of the NR-DC UE.

[Table 10]

| |
|---|
| Standard meeting RAN3#117bis-e Agreement<br>    ■ In DC, the UE switches the reporting leg based on indication from network, FFS on implicit or explicit way.<br>    ■ Turn into an agreement the WA stating that, if QoE reports are received by the SN, the SN can forward the QoE reports to MCE directly.<br>    ■ The MN can receive RVQoE reports directly from the UE.<br>    ■ The SN can receive RVQoE reports directly from the UE. |
| Standard meeting RAN2#119bis-e Agreement<br>    ■ Use SRB4 as baseline for Rel-18 QoE. FFS how we can send QoE reports towards SN (e.g. only SRB4, define new SRB, reuse SRB3, split SRB). Discuss details in the next meeting. |

Meanwhile, the UE 1g-05 may require SRB configuration with the SN 1g-15 as well as the MN 1g-10 to transmit a QoE measurement report message. The UE 1g-05 may use SRB4 to transmit the QoE measurement report message to the MN (RRC layer of MN) 1g-10. Alternatively, the UE 1g-05 may define/use split SRB4 to transmit the QoE measurement report message to the MN (RRC layer of MN) 1g-10. In this case, the QoE measurement report message may be delivered to the PDCP/RRC layers of the MN 1g-10 through the PHY/MAC/RLC layers of the SN 1g-15. Alternatively, the UE 1g-05 may use SRB3 to transmit the QoE measurement report message to the SN (RRC layer of SN) 1g-15. Here, the QoE measurement report message may be a message with lower priority than the RRC message transmitted through the conventional SRB3. This is because QoE reporting is used for network operation optimization, but may not be essential for network operation. Therefore, to transmit the QoE measurement report message to the SN (RRC layer of SN), a new SRB (e.g., SRB5 with lower priority than SRB3) may be defined/used. Similar to SRB3, SRB5 may connect the RRC layer of the SN through PHY/MAC/RLC/PDCP layers of the SN.

To receive QoE configuration information from the MN (RRC layer of MN) 1g-10, the UE 1g-05 may be configured with SRB1 (or split SRB1) and may use the same. Also, to receive QoE configuration information from the SN (RRC layer of SN) 1g-15, the UE 1g-05 may be configured with SRB3 and may use the same. Alternatively, the UE 1g-05 may receive QoE configuration information in a form in which an SN message (including SN QoE configuration information) is included in the SRB1 message.

According to the agreement described in [Table 10] above (In DC, the UE switches the reporting leg based on indication from network, FFS on implicit or explicit way.), the UE in the NR-DC state may receive an indication for reporting leg for QoE measurement report (whether to transmit it to MN or SN) from the network.

As an embodiment of the disclosure, when the UE 1g-05 receives, from the MN (or RRC layer of MN) 1g-10 (or through SRB used/defined for QoE configuration of MN, for example, SRB1 or split SRB1), QoE configuration (e.g., through appLayerMeasconfig within RRCReconfiguration or RRCResume), a default reporting leg of the UE 1g-05 may be the MN. When the MN 1g-10 transmits QoE configuration to the UE 1g-05, indicator (indication or indicator) 1 may be defined (e.g., within appLayerMeasconfig) to indicate the reporting leg of the UE 1g-05 as the SN. When the indicator is set to true or present, the UE 1g-05 may transmit a QoE measurement report to the SN (RRC layer of SN) 1g-15, and may transmit the QoE measurement report through an SRB (e.g., SRB3, SRB5) defined and used for the QoE measurement report to the SN 1g-15. Conversely, when the indicator is set to false or absent, the UE 1g-05 may transmit the QoE measurement report to the default reporting leg, that is, the MN (RRC layer of MN), and may transmit the QoE measurement report through an SRB (e.g., SRB4, split SRB4) defined/used for the QoE measurement report to the MN. The embodiment may be used when the UE 1g-05 is configured with an SRB (e.g., SRB4) for reporting to the MN 1g-10 and an SRB (SRB5) for reporting to the SN.

As an embodiment of the disclosure, when the UE 1g-05 receives QoE configuration (e.g., through appLayerMeasconfig within RRCReconfiguration or RRCResume) from the SN (or RRC layer of SN) 1g-15 (or through SRB used/defined for QoE configuration of SN, for example, through SRB3), the default reporting leg of the UE may be the SN. When the SN 1g-15 transmits QoE configuration to the UE 1g-05, indicator 2 may be defined (e.g., within appLayerMeasconfig) to indicate the reporting leg of the UE 1g-05 as the MN. When the corresponding indicator is set to true or present, the UE 1g-05 may transmit the QoE measurement report to the MN (RRC layer of MN) 1g-10, and may transmit the QoE measurement report through the SRB (e.g., SRB4) defined/used for the QoE measurement report to the MN 1g-10. Conversely, when the indicator is set to false or absent, the UE 1g-05 may transmit the QoE measurement report to the default reporting leg, that is, the SN (RRC layer of SN) 1g-15, and may transmit the QoE measurement report through the SRB (e.g., SRB3, SRB5) defined/used for the QoE measurement report to the SN 1g-15. The embodiment may be used when the UE 1g-05 is configured with both the SRB (e.g., SRB4) for reporting to the MN 1g-10 and the SRB (SRB5) for reporting to the SN.

As an embodiment of the disclosure, for the above indicator 1 and indicator 2, a single parameter (e.g., single parameter within appLayerMeasconfig) may be commonly defined. That is, the parameter (within appLayerMeasconfig) transmitted from the MN 1g-10 may represent indicator 1, and the parameter (within appLayerMeasconfig) transmitted from the SN 1g-15 may represent indicator 2.

As an embodiment of the disclosure, regardless of from which base station (MN or SN) the UE 1g-05 receives QoE configuration information, indicator 3 (capable of indicating MN or SN) may be defined within the QoE configuration information (e.g., appLayerMeasconfig). When indicator 3 is set as the MN 1g-10, the UE 1g-05 may transmit the QoE measurement report to the MN (RRC layer of MN) 1g-10, and may transmit the QoE measurement report through the SRB (e.g., SRB4) defined/used for the QoE measurement report to the MN 1g-10. Unlike this, when indicator 3 is set as the SN, the UE 1g-05 may transmit the QoE measurement report to the SN (RRC layer of SN) 1g-15, and may transmit the QoE measurement report through the SRB (e.g., SRB3) defined/used for the QoE measurement report to the SN 1g-15.

The UE 1g-05 may have a plurality of (independent) QoE configurations and may perform a plurality of QoE measurements independently based on the configurations, and may use QoE measurement configuration identity (ID) to identify QoE report information generated based on each QoE measurement. For example, the base station may configure three pieces of QoE configuration information to the UE 1g-05, which may indicate ID (e.g., measConfigAppLayerId=1) of first configuration information, ID (e.g., measConfigAppLayerId=2) of second configuration information, and ID (e.g., measConfigAppLayerId=3) of third configuration information, respectively. The UE 1g-05 may perform a measurement through each piece of QoE configuration information, and may report QoE measurement report information generated according to measurement performance to the base station by mapping the same together with corresponding QoE configuration ID. For example, in a single QoE measurement report message, measConfigAppLayerId=1 may be indicated, and at the same time, measurement report results corresponding thereto may be included, measConfigAppLayerId=2 may be indicated, and at the same time, measurement report results corresponding thereto may be included, and measConfigAppLayerId=3 may be indicated, and at the same time, measurement report results corresponding thereto may be included.

As an embodiment of the disclosure, a reporting leg may be configured for each QoE measurement configuration ID (e.g., measConfigAppLayerId). The base station, the OAM, or the CN may desire a measurement report to be transmitted to a different base station for each QoE configuration. For example, the MN 1g-10 may desire to include RVQoE configuration generated by the MN 1g-10 in measurement configuration information, measConfigAppLayerId=1, and to directly receive a measurement report thereon (without going through SN). On the other hand, the SN 1g-15 may desire to include RVQoE configuration generated by the SN in measurement configuration information, measConfigAppLayerId=2, and to directly receive a measurement report thereon (without going through MN). Alternatively, the MN and the SN may perform negotiation regarding where to place the reporting leg for each QoE configuration. Alternatively, the OAM or the CN may indicate where to place the reporting leg for each QoE configuration.

To this end, configuration for the reporting leg (e.g., indicator 1, indicator 2, or indicator 3 described above) may be set for each QoE measurement configuration ID (e.g., measConfigAppLayerId), and accordingly, the UE 1g-05 may select a different reporting leg for each QoE measurement configuration to transmit the QoE measurement report. For example, the UE 1g-05 may transmit the QoE measurement report, measConfigAppLayerId=1, to the SN (RRC layer of SN) 1g-15 (through above indicator 1, indicator 2, or indicator 3 corresponding to measConfigAppLayerId=1) based on the indication to transmit the QoE measurement report corresponding to the configuration of measConfigAppLayerId=1 to the SN, and may use the SRB (e.g., SRB3) defined/used for the QoE measurement report to the SN when transmitting the corresponding QoE measurement report. At the same time, the UE 1g-05 may transmit the QoE measurement report, measConfigAppLayerId=2, to the MN (RRC layer of MN) (through above indicator 1, indicator 2, or indicator 3 corresponding to measConfigAppLayerId=2) based on the indication to transmit the QoE measurement report corresponding to the configuration of measConfigAppLayerId=2 to the MN, and may use the SRB (e.g., SRB4) defined/used for the QoE measurement report to the MN 1g-10 when transmitting the corresponding QoE measurement report.

As an embodiment of the disclosure, the UE 1g-05 may generate a single QoE measurement report message (e.g., MeasurementReportAppLayer) by collecting only a QoE measurement report for at least one QoE configuration ID indicated to be transmitted to the MN 1g-10 among QoE measurement reports, and may transmit the QoE measurement report through the SRB (e.g., SRB4) defined/used for the QoE measurement report to the MN 1g-10. Also, the UE 1g-05 may generate another QoE measurement report message (e.g., MeasurementReportAppLayer) by collecting only a QoE measurement report for at least one QoE configuration ID indicated to be transmitted to the SN 1g-15 among QoE measurement reports, and may transmit the QoE measurement report through the SRB (e.g., SRB3 or SRB5) defined/used for the QoE measurement report to the SN 1g-15.

As an embodiment of the disclosure, the UE 1g-05 may select a reporting leg for a QoE measurement report according to SRB configuration configured from the base station. If the SRB (e.g., SRB4) defined/used for the QoE measurement report to the MN 1g-10 is configured, the UE 1g-05 may transmit the QoE measurement report (or only QoE measurement report corresponding to measConfigAppLayerId that needs to be transmitted to MN) to the MN 1g-10. If the SRB (e.g., SRB3 or SRB5) defined/used for the QoE measurement report to the SN 1g-15 is configured, the UE 1g-05 may transmit the QoE measurement report (or QoE measurement report corresponding to measConfigAppLayerId that needs to be transmitted to SN) to the SN 1g-15. If both the SRB to the MN 1g-10 and the SRB to the SN 1g-15 are configured, the UE may perform transmission by selecting the SRB for one direction between both directions.

As an embodiment of the disclosure, the UE 1g-05 may transmit the corresponding QoE measurement report to the base station (MN or SN) from which QoE configuration is received. If the UE 1g-05 receives QoE measurement information from the MN 1g-10 (or receives QoE configuration through SRB (e.g., SRB1) for QoE configuration from MN), the UE 1g-05 may transmit the corresponding measurement report to the MN 1g-10. For example, in the case of receiving QoE configuration with measConfigAppLayerId= 1,3 from the MN 1g-10, the UE 1g-05 may transmit the measurement report generated with measConfigAppLayerId=1,3 to the MN 1g-10. Conversely, when the UE 1g-05 receives QoE measurement information from the SN 1g-15 (or receives QoE configuration through SRB (e.g., SRB3) for QoE configuration from SN), the UE 1g-05 may transmit the corresponding measurement report to the SN 1g-15. For example, in the case of receiving QoE configuration with measConfigAppLayerId=2,4 from the SN 1g-15, the UE 1g-05 may transmit the measurement report generated with measConfigAppLayerId=2,4 to the SN 1g-15.

As an embodiment of the present invention, when the UE 1g-05 receives instruction for the QoE measurement report from the MN 1g-10, but transmission is impossible (e.g., when SRB for transmission to corresponding base station is not configured, when radio link to master cell group (MCG) is failure, or when MN is in overload state (e.g., pauseReporting received from MN is set to true), the UE may transmit the QoE measurement report to the SN 1g-15. To allow the operation of the UE 1g-05 (operation of UE that changes reporting leg on its own), an indicator (e.g., indicator 4-1) may be included in QoE configuration information and received from the base station. When the above indicator 4-1 is included or set to true, the UE 1g-05 may perform QoE measurement reporting to the SN 1g-15 although it is configured with measurement reporting to the MN 1g-10. When the above indicator 4-1 is omitted or set to false, the UE 1g-05 may not transmit the measurement report to the MN 1g-10 to the SN 1g-15, and may store the same (for later transmission) or discard the same (for memory saving). When the UE 1g-05 is configured with measurement reporting to the MN 1g-10, but performs QoE measurement reporting to the SN 1g-15, an indicator (indicator 5-1) indicating that the corresponding measurement report needs to be delivered to the MN 1g-10 may be defined/included in the QoE measurement report message. When the UE 1g-05 includes the indicator 5-1 in the QoE measurement report message or indicates the same as true, this may indicate that it is originally the QoE measurement report for the MN 1g-10, and based on this, the SN 1g-15 may deliver the corresponding report to the MN 1g-10. When the UE 1g-05 omits the above indicator 5-1 from the QoE measurement report message or indicates the same as false, this may indicate that it is originally the QoE measurement report for the SN and accordingly, the SN 1g-15 may not deliver the corresponding report to the MN 1g-10.

As an embodiment of the disclosure, when the UE 1g-05 is instructed to transmit the QoE measurement report to the SN 1g-15, but transmission is impossible (e.g., when SRB for QoE measurement report transmission to corresponding base station is not configured, when radio link for secondary cell group (SCG) is failure, or when SN is in overload state (e.g., when pauseReporting received from SN is set to true)), the UE 1g-05 may transmit the QoE measurement report to the MN 1g-10. To allow the operation of the UE (operation of UE that changes reporting leg on its own), the indicator (e.g., indicator 4-2) may be included in QoE configuration information and may be received from the base station. When the above indicator 4-2 is included in the QoE configuration information or set to true, the UE may perform QoE measurement reporting to the MN 1g-10 although it is configured with measurement reporting to the SN 1g-15. When the above indicator 4-2 is omitted from the QoE configuration information or set to false, the UE 1g-05 may not transmit the measurement report to the SN 1g-15 to the MN 1g-10, and may store the same (for later transmission) or discard the same (for memory saving). When the UE 1g-05 is configured with measurement reporting to the SN 1g-15, but performs QoE measurement reporting to the MN 1g-10, an indicator (e.g., indicator 5-2) that the corresponding measurement report needs to be delivered to the SN 1g-15 may be defined/included in the QoE measurement report message. When the UE 1g-05 includes the above indicator 5-2 in the QoE measurement report message or indicates the same as true, this may indicate that it is originally the QoE measurement report for the SN and based on this, the MN 1g-10 may deliver the corresponding report to the SN 1g-15. In contrast, when the UE 1g-05 omits the above indicator 5-2 from the QoE measurement report message or indicates the same as false, this may indicate that it is originally the QoE measurement report for the MN and accordingly, the MN 1g-10 may not deliver the corresponding report to the SN 1g-15.

As an embodiment of the disclosure, the above-described indicator 4-1 and indicator 4-2 (i.e., indicators allowing transmission of QoE measurement report to leg different from configured leg) may be defined by a single common parameter.

As an embodiment of the disclosure, the above-described indicator 5-1 and indicator 5-2 (i.e., parameters indicating QoE measurement report for leg different from leg for base station from which corresponding QoE report is received) may be defined by a single common parameter.

As an embodiment of the disclosure, when the UE receives a conventional pauseResume indicator set to true from the MN (or through SRB (e.g., SRB1) QoE configuration from MN), the UE may perform QoE measurement reporting to the SN or through the SRB (e.g., SRB3, or SRB5) configured between the UE and the SN. If the UE has not received or has not been configured with the pauseResume indicator set to false from the MN (or through SRB (e.g., SRB1) for QoE configuration from MN), the UE may perform QoE measurement reporting to the MN or through the SRB (e.g., SRB4) configured between the UE and the MN. This embodiment has the advantage of reutilizing the conventional indicator.

As an embodiment of the disclosure, when the UE receives the conventional pauseResume indicator set to true from the SN (or through SRB (e.g., SRB3) for QoE configuration from SN), the UE may perform QoE measurement reporting to the MN, or through the SRB (e.g., SRB4) configured between the UE and the MN. If the UE has not received or has not been configured with the pauseResume indicator set to false from the SN (or through SRB (e.g., SRB3) for QoE configuration from SN), the UE may perform QoE measurement reporting to the SN or through the SRB (e.g., SRB3 or SRB5) configured between the UE and the SN. The embodiment has the advantage of reutilizing the conventional indicator.

As an embodiment of the present invention, an indicator (e.g., indicator 6) regarding whether the UE supports QoE measurement (and/or configuration and/or reporting) in NR-DC may be defined in a UE capability message (e.g., 1c-10 in FIG. 3 described above). If the UE supports the QoE measurement (and/or configuration and/or reporting) in NR-DC, indicator 6 may be included in the UE capability message or may be set to true. Conversely, if the UE does not support the QoE measurement (and/or configuration and/or reporting) in NR-DC, indicator 6 may be omitted from the UE capability message or set to false.

As an embodiment of the disclosure, an indicator (e.g., indicator 7) regarding whether the UE supports changing a reporting leg for QoE measurement report in NR-DC may be defined in the UE Capability message (e.g., 1c-10 in FIG. 3 described above). If the UE supports changing the reporting leg in NR-DC, indicator 7 may be included in the UE capability message or may be set to true. Conversely, if the UE does not support changing the reporting leg in NR-DC, indicator 7 may be omitted from the UE capability message or may be set to false.

Although the embodiment of the disclosure is prepared assuming NR-DC, the same method may be applied to various types of DC situations (e.g., multi-radio access technology (RAT)-DC).

As an embodiment of the disclosure, the MN or the MCG may transmit QoE configuration to the UE through SRB1, and the SN or the SCG may transmit the QoE configuration to the UE through SRB3.

As an embodiment of the disclosure, the MN or the MCG may deliver QoE configuration to the SN or the SCG (e.g., in encapsulated message form), and the SN or the SCG may configure the same to the UE through SRB3.

As an embodiment of the disclosure, the SN or the SCG may deliver QoE configuration to the MN or the MCG (e.g., in encapsulated message form), and the MN or the MCG may configure the same to the UE through SRB1.

As an embodiment of the disclosure, the UE may transmit the QoE measurement report to the MN or the MCG through SRB4, and may transmit the QoE measurement report to the SN or the SCG through SRB5.

As an embodiment of the disclosure, the UE may transmit the QoE measurement report to the MN or the MCG through SRB4, and the MN or the MCG that receives the same may transmit the same to the TCE or the MCE (through CN).

As an embodiment of the disclosure, the UE may transmit the QoE measurement report to the MN or the MCG through SRB4, and the MN or the MCG that receives the same may transmit the same to the SN or the SCG (e.g., in encapsulated message form).

As an embodiment of the disclosure, the UE may transmit the QoE measurement report to the SN or the SCG through SRB5, and the SN or the SCG that receives the same may transmit the same to the TCE or the MCE (through CN).

As an embodiment of the disclosure, the UE may transmit the QoE measurement report to the SN or the SCG through SRB5, and the SN or the SCG that receives the same may transmit the same to the MN or the MCG (e.g., in encapsulated message form).

As an embodiment of the disclosure, when the UE configured with DC (e.g., NR-DC) performs SCG release, the UE may release all QoE configurations configured by the SN or the SCG. Also, the UE may discard all the QoE measurement reports measured based on the QoE configurations.

As an embodiment of the disclosure, when the UE configured with DC (e.g., NR-DC) performs SCG release, the UE may discard all QoE configurations that indicate the reporting leg as the SN or the SCG. Also, the UE may discard all the QoE measurement reports measured based on the QoE configurations.

As an embodiment of the disclosure, when the UE configured with DC (e.g., NR-DC) performs SCG release, QoE configuration that satisfies the following two conditions may be discarded.

1) QoE configuration that indicates the reporting leg as the SN or the SSG

2) QoE configuration configured by the SN or the SCG

Also, the UE may discard all QoE measurement reports measured by the QoE configurations.

As an embodiment of the disclosure, when the UE configured with DC (e.g., NR-DC) performs SCG release, all the QoE configurations may be maintained without being discarded. Instead, for QoE configuration that indicates the reporting leg as the SN or the SCG, the UE may perform an operation of changing the reporting leg to the MN or the MCG. Also, the UE may report the QoE measurement report generated for the QoE configuration that indicates the reporting leg as the SN or the SCG to the MN or the MCG (e.g., through SRB4) based on SCG release.

As an embodiment of the disclosure, when performing SCG release, the UE configured with DC (e.g., NR-DC) may discard all of RVQoE configurations configured by the SN or the SCG or RVQoE configurations that indicate the reporting leg as the SN or the SCG. Here, the UE may maintain all other QoE configurations without discarding them. Among the maintained QoE configurations, the UE may perform an operation of changing the reporting leg to the MN or the MCG for the QoE configuration that indicates the reporting leg as the SN or the SCG. Also, only for the maintained QoE configuration, the UE may report, to the MN or the MCG (e.g., through SRB4), the QoE measurement report generated based on the QoE configuration that indicates the reporting leg as the SN or the SCG.

As an embodiment of the disclosure, when the UE configured with DC (e.g., NR-DC) performs SCG release or when SCG release or DC release is instructed from the base station, the base station may instruct the UE which QoE configuration to maintain or which QoE configuration to discard. Also, the base station may instruct the UE which RVQoE configuration to maintain or which RVQoE configuration to discard. The UE may operate by selecting whether to maintain or discard the (RV)QoE configuration based on the configuration of the base station.

As an embodiment of the disclosure, the base station may instruct the UE to temporarily stop (pause or suspend) QoE measurement reporting configured to the UE (e.g., in the case of RAN overload state) (e.g., through pauseReporting indicator within AppLayerMeasConfig). The indicator (e.g., pauseReporting) may be indicated for each QoE configuration ID (e.g., measConfigAppLayerId) to pause or suspend reporting of each QoE measurement according to each QoE configuration. When the pauseReporting indicator is set to true from the base station, the UE may temporarily pause QoE measurement reporting of the corresponding QoE configuration ID (e.g., measConfigAppLayerId). The UE may store a QoE measurement report generated during a period for which measurement reporting is paused. When the UE receives an instruction from the base station to resume QoE measurement reporting (e.g., when pauseReporting indicator is set to false), the UE may resume a procedure of reporting the stored QoE measurement report to the base station.

As an embodiment of the disclosure (Option 1), if the reporting leg of the QoE configuration configured to DC (e.g., NR-DC) UE is set as the MN or the MCG, a pause indicator (e.g., pauseReporting) for the corresponding QoE configuration of the UE may transmit only the MN or the MCG. This is because the MN or the MCG may address its own RAN overload state by pausing or resuming the corresponding QoE configuration. Conversely, if the reporting leg of the QoE configuration configured to the DC (e.g., NR-DC) UE is set as the SN or the SCG, the pause indicator (e.g., pauseReporting) for the corresponding QoE configuration of the UE may transmit only the SN or the SCG. This is because the SN or the SCG may address its own RAN overload state by pausing or resuming the corresponding QoE configuration.

As an embodiment of the disclosure (Option 2), if the MN or the MCG has provided QoE configuration to the DC (e.g., NR-DC) UE, only the MN or the MCG may transmit the pause indicator (e.g., pauseReporting) for the corresponding QoE configuration of the UE. This is because the MN or the MCG is an entity that manages the corresponding QoE configuration, so it is desirable for the corresponding MN or MCG to control the pause or resume operation. Conversely, if the SN or the SCG has provided QoE configuration to the DC (e.g., NR-DC) UE, only the SN or the SCG may transmit the pause indicator (e.g., pauseReporting) for the corresponding QoE configuration of the UE. This is because the SN or the SCG is an entity that manages the corresponding QoE configuration, so it is desirable for the SN or the SCG to control the pause or resume operation at all times.

As an embodiment of the disclosure (Option 3), both the MN (or MCG) and the SN (or SCG) may transmit the pause indicator (e.g., pauseReporting) to the DC (e.g., NR-DC) UE, for example, for each QoE configuration.

As an embodiment of the disclosure, if the UE is configured with pause (e.g., according to Option 1, Option 2, or Option 3 described above) (e.g., pauseReporting=true), the UE may pause QoE measurement reporting (to reporting leg), and may store the measurement report.

As an embodiment of the disclosure (Option A), to resume the paused QoE configuration reporting, the base station may configure the UE to change the reporting leg. The UE configured with this may identify that the corresponding QoE measurement reporting is resumed and may resume the QoE measurement reporting (including stored measurement report) using the changed reporting leg.

As an embodiment of the disclosure (Option B), to resume the paused QoE configuration reporting, the base station may initially instruct the UE to resume. Here, the resume may be instructed by indicating, for example, pauseReporting=false. The UE that receives the same may identify that the corresponding QoE measurement reporting is resumed and may resume the QoE measurement reporting (including stored measurement report) using the existing reporting leg. Alternatively, the base station may instruct the UE to resume (e.g., indicate pauseReporting=false) and at the same time, to change the reporting leg. The UE that receives the same may identify that the corresponding QoE measurement reporting is resumed and may resume QoE measurement reporting (including stored measurement report) using the changed reporting leg.

As an embodiment of the disclosure, the UE may operate in the following order.

- The UE may receive a system information block (SIB) and may camp on a cell.

- The corresponding UE may establish an RRC connection with the corresponding cell or base station.

- The base station may configure DC (e.g., NR-DC) to the UE

- The base station (MN or SN) may provide one or a plurality of QoE configurations to the UE configured with DC (e.g., NR-DC). Here, the base station may configure a reporting leg for each QoE configuration or may configure a common reporting leg for all QoE configurations.

- The UE may perform QoE measurement reporting according to the configured reporting leg (for each QoE configuration or common for all QoE configurations).

- The base station may configure the UE to change the reporting leg (for each QoE configuration or common for all QoE configurations).

- The UE may perform QoE measurement reporting according to the changed reporting leg (for each QoE configuration or common for all QoE configurations).

- The UE is instructed by the base station to pause or suspend QoE measurement reporting (for each QoE configuration or common for all QoE configurations) according to the above-described Option 1, Option 2, or Option 3 (e.g., pausing of the QoE measurement report may be instructed by being instructed with pauseReporting=true).

- The UE may pause QoE measurement reporting for QoE configuration instructed to pause and may store a QoE measurement report generated thereafter.

- After that, the UE may perform one of the following operations for the paused QoE configuration. (Although it is assumed below that a reporting leg indicator and a pauseReporting indicator are simultaneously indicated within the same message (e.g., RRCReconfiguration), the two indicators may be instructed to the UE at different points in times through different messages (e.g., RRCReconfiguration 1, RRCReconfiguration 2), respectively)

■ If the base station instructs change of the reporting leg (according to Option 1, Option 2, or Option 3) and at the same time, pauseReporting is absent:

♦ The UE may resume QoE measurement reporting (including stored QoE measurement report) using the changed reporting leg (Option A).

♦ The UE may change the reporting leg, but may store the QoE measurement report with QoE measurement reporting still being paused (Option B).

■ If the base station instructs change of the reporting leg (according to Option 1, Option 2, or Option 3) and at the same time, sets pauseReporting to false:

♦ The UE may resume QoE measurement reporting (including stored QoE measurement report) using the changed reporting leg.

■ If the base station instructs change of the reporting leg (according to Option 1, Option 2, or Option 3) and at the same time, sets pauseReporting to true:

♦ The UE may change the reporting leg, but may store the QoE measurement report with QoE measurement reporting still being paused.

■ If the base station does not instruct change of the reporting leg (according to Option 1, Option 2, or Option 3) or instructs maintaining the same and at the same time, pauseReporting is absent:

♦ The UE may store the QoE measurement report while maintaining the reporting leg and with QoE measurement reporting being paused.

■ If the base station does not instruct change of the reporting leg (according to Option 1, Option 2, or Option 3) or instructs maintaining and at the same time, sets pauseReporting to false:

♦ The UE may resume QoE measurement reporting (including stored QoE measurement report) using the existing reporting leg.

■ If the base station does not instruct change of the reporting leg (according to Option 1, Option 2, or Option 3) or instructs maintaining the same and at the same time, sets pauseReporting to true:

♦ The UE may store the QoE measurement report while maintain the reporting leg and with QoE measurement reporting being paused.

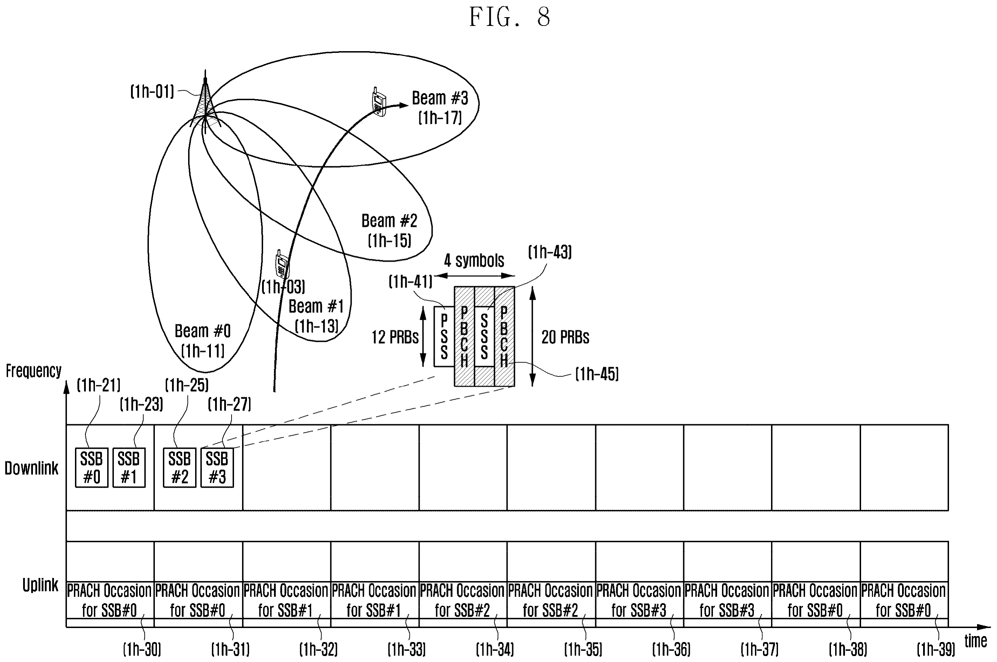

FIG. 8 illustrates an example of a downlink and uplink channel frame structure when performing beam-based communication in an NR system according to an example of the disclosure.

In FIG. 8, a base station 1h-01 transmits a signal in the form of a beam 1h-11, 1h-13, 1h-15, 1h-17 to transmit a wider coverage or stronger signal. Therefore, a UE 1h-03 within a cell may transmit and receive data using a specific beam (beam #1 1h-13 in this example drawing) transmitted from the base station 1h-01.

Meanwhile, the state of the UE may be classified into an idle mode (RRC_IDLE) and a connected mode (RRC_CONNECTED) depending on whether the UE 1h-03 is connected to the base station 1h-01. If the UE 1h-03 is in an idle mode state, the base station 1h-01 may be unaware of a location of the UE 1h-03.

Here, when the UE in the idle mode state desires to transition to a connected mode state, the UE 1h-03 receives synchronization signal blocks (SSBs) 1h-21, 1h-23, 1h-25, and 1h-27 transmitted from the base station 1h-01. The SSB in this drawing refers to an SSB signal periodically transmitted according to a periodicity set by the base station, and each SSB may include a primary synchronization signal (PSS) 1h-41, a secondary synchronization signal (SSS) 1h-43, and a physical broadcast channel (PBCH).

In this example drawing, a scenario in which an SSB is transmitted for each beam is assumed. For example, a case in which the SSB#0 1h-21 is transmitted using the beam #0 1h-11, the SSB#1 1h-23 is transmitted using the beam #1 1h-13, the SSB#2 1h-25 is transmitted using the beam #2 1h-15, and the SSB#3 1h-27 is transmitted using the beam #3 1h-17 is assumed. In this example drawing, a situation in which the UE in the idle mode is located in beam #1 is assumed. However, when the UE in the connected mode performs a random access, an SSB received at a point in time at which the UE in the connected mode performs the random access may be selected and used.

With reference to FIG. 8, the UE 1h-03 receives the SSB #1 transmitted using the beam #1. If the SSB #1 is received, the UE 1h-03 may acquire a physical cell identifier (PCI) of the base station through the PSS and the SSS, and may receive the PBCH to identify an identifier (i.e., #1) of the currently received SSB and a location at which the current SSB is received within a 10 ms frame and in which SFN it is present within a system frame number (SFN) with periodicity of 10.24 seconds. Also, a master information block (MIB) is included in the PBCH, and the MIB includes information regarding a location at which it is possible to receive system information block type 1 (SIB1) that broadcasts more detailed cell configuration information. If SIB1 is received, the UE 1h-03 may know the total number of SSBs transmitted from the base station 1h-01 and may identify a location of a physical random access channel (PRACH) occasion (in this example drawing, a scenario in which allocation is made every 1 ms is assumed: from (1h-30) to (1h-39)) at which it is possible to perform a random access to transition to the connected mode state (more precisely, possible to transmit a preamble that is a physical signal specially designed to match uplink synchronization). In addition, the UE 1h-03 may know which PRACH occasion among the PRACH occasions is mapped to which SSB index based on the information. For example, in this example drawing, a scenario in which allocation is made every 1 ms is assumed, and a scenario in which 1/2 SSBs are allocated per PRACH occasion (i.e., two PRACH occasions are allocated per SSB) is assumed. Therefore, a scenario is illustrated in which two PRACH occasions are allocated for each SSB, starting from a PRACH occasion that starts from an SFN value. That is, (1h-30) and (1h-31) are allocated for SSB#0, (1h-32) and (1h-33) are allocated for SSB#1, and the like. After PRACH occasions are configured for all SSBs, PRACH occasions (1h-38) and (1h-39) are allocated again for the first SSB.

The UE 1h-03 identifies locations of PRACH occasions (1h-32) and (1h-33) for SSB#1 and transmits a random access preamble to an earliest PRACH occasion (e.g., (1h-32)) at a current point in time between the PRACH occasions (1h-32) and (1h-33) corresponding to SSB#1. The base station 1h-01 received the preamble in the PRACH occasion of (1h-32), so may know that the corresponding UE selected SSB#1 and transmitted the preamble, and accordingly, transmits and receives data through the corresponding beam when performing a subsequent random access.

Meanwhile, when the UE in a connected state moves from a current (source) base station to a destination (target) base station due to reasons such as handover, the UE performs a random access to the target base station and performs an operation of selecting an SSB and transmitting a random access as described above. In addition, when performing handover, the source base station transmits a handover command to the UE such that the UE moves from the source base station to the target base station, and the handover command message may allocate a UE-dedicated random access preamble identifier for each SSB of the target base station to be available when performing the random access at the target base station. Here, the base station may not allocate the dedicated random access preamble identifier to all beams (depending on current location of UE), and accordingly, a dedicated random access preamble may not be allocated to some SSBs (e.g., dedicated random access preamble may be allocated only to beams #2 and #3). If a dedicated random access preamble is not allocated to an SSB selected by the UE for preamble transmission, the UE randomly selects a contention-based random access preamble and performs random access. For example, in this drawing, when the UE is initially present at Beam #1 and performs contention-based random access but fails and then transmits a random access preamble again by being located at Beam #3, a scenario of performing transmission of a dedicated preamble allocated to Beam #3 is possible. That is, when a preamble retransmission occurs within a single random access procedure, a contention-based random access procedure and a non-contention-based random access procedure may be mixed and used depending on whether a dedicated random access preamble is allocated to a selected SSB for each preamble transmission.

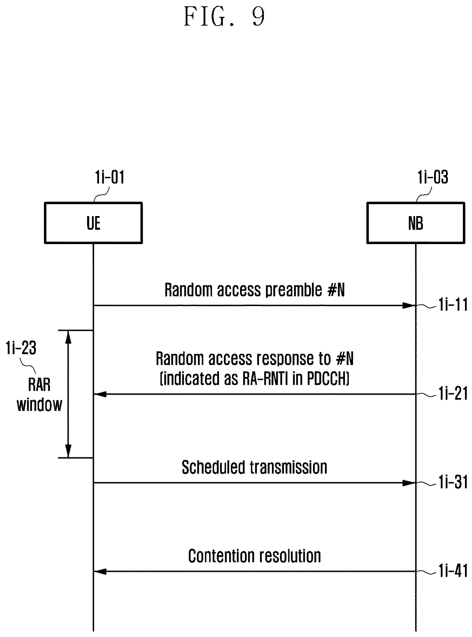

FIG. 9 illustrates a contention-based four-stage-random access procedure performed by a UE in various cases in which a random access to a base station is required according to an example of the disclosure.

For access to a base station 1i-03, a UE 1i-01 selects a PRACH occasion according to FIG. 8 described above and transmits a random access preamble in the corresponding PRACH occasion (1i-11). At least one UE may simultaneously transmit a random access preamble using the above PRACH resource. The PRACH resource may be allocated to correspond to a single subframe, or only some symbols within a single subframe may be used as the PRACH resources. Information on the PRACH resources is included in system information broadcast by the base station 1i-03 and accordingly, the UE 1i-01 may know time and frequency resources to be used to transmit a preamble. Also, since the random access preamble is a specific sequence specially designed to be receivable although it is transmitted before being completely synchronized with the base station 1i-03, there may be a plurality of preamble identifiers (indexes) according to the standard. If there are the plurality of preamble identifiers, a preamble transmitted by the UE 1i-01 may be one randomly selected by the UE 1i-01, or may be a specific preamble designated by the base station 1i-03.

In the case of receiving the preamble, the base station 1i-03 transmits a random access response (RAR) message (also, referred to as Msg2) related thereto to the UE 1i-01 (1i-21). The RAR message includes identifier information of a preamble used in operation (1i-11) above, and includes uplink transmission timing alignment information, uplink resource allocation (uplink grant) information to be used in a subsequent operation (i.e., operation (1i-31)), and temporary UE identifier information. The preamble identifier information may include, for example, responses for the respective preambles within the RAR message when a plurality of UEs attempt random access by transmitting different preambles in operation (1i-11), and is transmitted to indicate which preamble a response message is for. The uplink resource allocation information included within each response for each preamble includes detailed information on a resource to be used by the UE in operation (1i-31), and includes a physical location and size of the resource, a modulation and coding scheme (MCS) used for transmission, and power adjustment information during transmission. The temporary UE identifier information is a value transmitted to be available since the UE 1i-01 does not have an identifier allocated by the base station 1i-03 for communication with the base station 1i-03 when the UE that transmitted the preamble performs an initial access.

Meanwhile, the RAR message may include not only response(s) to each preamble, but also optionally a backoff indicator (BI). The backoff indicator is a value transmitted to randomly delay transmission according to a value of the backoff indicator without directly retransmitting the preamble, when the random access preamble needs to be retransmitted due to an unsuccessful random access. More specifically, when the UE does not properly receive an RAR, or when contention resolution described below is not properly performed, the random access preamble may need to be retransmitted. Here, an index value according to [Table 11] below may be indicated as a backoff indicator, and the UE selects a random value from 0 to a value indicated by the index value and retransmits a random access preamble after a period of time by the corresponding value. For example, when the base station indicates 5 (i.e., 60ms) as a BI value and the UE randomly selects a value of 23 ms between 0 and 60 ms, the selected value is stored in a variable called PREAMBLE_BACKOFF and the UE performs a procedure of retransmitting a preamble after 23 ms. In a case in which the backoff indicator is not transmitted, when a random access preamble needs to be retransmitted due to an unsuccessful random access, the UE transmits the random access preamble as soon as it is confirmed that the random access has failed.

[Table 11]

| Index | Backoff Parameter value (ms) |
|-------|------------------------------|
| 0 | 5 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | 1920 |
| 14 | Reserved |
| 15 | Reserved |

The RAR message needs to be transmitted within a predetermined period starting from a predetermined time after transmitting the preamble. Here, the period is called 'RAR window'. The RAR window starts from a point in time at which a predetermined period of time elapses after transmitting a first preamble. The predetermined period of time may have a value of subframe unit (1ms) or less. Also, a length of the RAR window may be a predetermined value set by the base station for each PRACH resource or for each of at least one PRACH resource set within a system information message broadcast by the base station.

Meanwhile, when transmitting the RAR message, the base station schedules the corresponding RAR message through a physical downlink control channel (PDCCH) and the corresponding scheduling information is scrambled using a random access-radio network temporary identifier (RA-RNTI). The RA-RNTI is mapped to a PRACH resource used to transmit the (1i-11) message, and the UE that transmits a preamble in a specific PRACH resource attempts PDCCH reception based on the corresponding RA-RNTI and determines whether a corresponding RAR message is present. If the RAR message is a response to the preamble transmitted by the UE 1i-01 in operation (1i-11) as in this example drawing, the RA-RNTI used for this RAR message scheduling information includes information on the corresponding (1i-11) transmission. To this end, the RA-RNTI may be calculated with the following equation:

$$\text{RA-RNTI}= 1 + \text{s\_id} + 14 \times \text{t\_id} + 14 \times 80 \times \text{f\_id} + 14 \times 80 \times 8 \times \text{ul\_carrier\_id}$$

Here, the s_id denotes an index corresponding to a first OFDM symbol in which transmission of the preamble transmitted in operation (1i-11) starts, and has a value of $0 \leq \text{s\_id} < 14$ (i.e., maximum number of OFDM within one slot). Also, t_id denotes an index corresponding to a first slot in which transmission of the preamble transmitted in operation (1i-11) starts and has a value of $0 \leq \text{t\_id} < 80$ (i.e., maximum number of slots within one system frame (10 ms)). Also, the f_id denotes in which PRACH resource in terms of frequency the preamble transmitted in operation (1i-11) is transmitted and has a value of $0 \leq \text{f\_id} < 8$ (i.e., maximum number of PRACHs in frequency within the same time). And the ul_carrier_id denotes a factor for distinguishing whether the preamble is transmitted in a normal uplink (NUL) (0 in this case) or whether the preamble is transmitted in a supplementary uplink (SUL) (1 in this case) when two subcarriers are used as uplink for a single cell.

The UE 1i-01 that receives the RAR message transmits different messages according to the above-described various purposes to the resource allocated to the RAR message (1i-31). In this example drawing, a third transmitted message is called Msg3 (i.e., preamble in operation (1i-11) or (1i-13) is called Msgl, and RAR in operation (1i-21) is called Msg2). As an example of the Msg3 transmitted from the UE 1i-01, in the case of initial access, an RRCSetupRequest message that is an RRC layer message is transmitted, and in the case of re-access, an RRCReestablishmentRequest message is transmitted, in the case of handover, an RRCReconfigurationComplete message is transmitted, and, in an inactive mode, RRCResumeRequest is transmitted. Alternatively, a buffer status report (BSR) message for resource request may also be transmitted as Msg3.

Then, for an initial transmission (i.e., a case in which Msg3 does not include base station identifier information pre-allocated to UE, etc.), the UE 1i-01 may receive a contention resolution message from the base station 1i-03 (1i-41), and the contention resolution message may include the contents transmitted from the UE 1i-01 in Msg3. Therefore, although there are a plurality of UEs that select the same preamble in operation (1i-11) or (1i-13), it is possible to notify to which UE the response is.

Meanwhile, the NR is configured to support a frequency bandwidth of wideband (e.g., 100 MHz), there is no need for all UEs to support the wideband. For example, a wearable device, such as a smartwatch, may need only a predetermined level of bandwidth that allows communication. Therefore, the need for a simple UE with only essential functions emerged from requirements of existing NR UEs, and such UEs are called 'reduced capability (RedCap)' UEs. The RedCap UEs have a smaller bandwidth than that of existing NR UEs, such as 10 MHz or 20 MHz, and may only support a basic subcarrier spacing (SCS) value, such as 15 kHz. Also, a maximum supported data rate may be limited to, for example, 20 Mbps.

In addition, among RedCap UEs, there may be devices that are small in size and difficult to include a plurality of antennas and accordingly, UEs with the smaller number of antennas compared to existing UEs may also be considered. For example, there may be RedCap UEs including only one Rx antenna, which is referred to as 'RedCap UE with 1Rx (RedCap 1RX UE)'.

Furthermore, to expand the RedCap UE market, the need for a UE that supports relatively low cost, low energy consumption, and low data transmission rate compared to the RedCap UE also emerged. This may be called an enhanced RedCap (eRedCap) UE or a Rel-18 RedCap UE (since it is treated as a work item of 3GPP NR Release-18). The eRedCap UE is more simplified than the existing RedCap UE. For example, it may be a UE with the baseband bandwidth of a physical downlink shared channel (PDSCH) and a physical uplink shared channel (PUSCH) being reduced/limited to 5 MHz. For example, the bandwidth corresponding to the maximum number of unicast physical resource blocks (PRBs) that the UE may process within a single slot may be limited. Alternatively, the eRedCap UE may be a UE with a reduced/limited peak data rate.

As an embodiment of the disclosure, the eRedCap UEs may be classified into the following types:

- Type 1) UE with reduced/limited baseband bandwidth (e.g., 5MHz)

- Type 2) UE with reduced/limited peak data rate

- Type 3) UE with reduced/limited baseband bandwidth and reduced/limited peak data rate

As an embodiment of the present invention, the UE may indicate to the base station whether the UE is an eRedCap UE with Msgl during a random access process. This may be referred to as an Msgl-based early indication or Msgl EI. For example, the base station may provide dedicated preamble(s) to UEs only for eRedCap, and the eRedCap UE (or only eRedCap UE) may perform random access with the corresponding preamble. If the UE transmits Msgl using the corresponding preamble, the base station may identify that the corresponding UE is an eRedCap UE. As another example, the base station may separately allocate an initial uplink bandwidth part (BWP) only for the eRedCap UE, and the eRedCap UE (or only eRedCap UE) may use resources in the BWP. If the UE transmits Msgl using the preamble within the corresponding resource, the base station may identify that the UE is the eRedCap UE.

As an embodiment of the present invention, when the UE is the eRedCap UE, the UE may indicate to the base station which type of UE the UE is among the types (i.e., types 1/2/3) of the eRedCap UE through Msgl during the random access process. This may be referred to as Msgl-based early indication or Msg1 EI. For example, the base station may provide dedicated preamble(s) to UEs for each eRedCap type, and a type 1 eRedCap UE may perform a random access with a preamble allocated to type 1. Similarly, a type 2 eRedCap UE may perform a random access with a preamble allocated to type 2. Similarly, a type 3 eRedCap UE may perform a random access with a preamble allocated to type 3. If the UE transmits Msgl using the corresponding preamble, the base station may identify that the corresponding UE is the eRedCap UE, and may identify which type of eRedCap UE it is. As another example, the base station may separately allocate an initial uplink BWP for eRedCap UE only by eRedCap type, and the eRedCap UE (or only eRedCap UE) may use resources in the BWP allocated to correspond to its own type. If the UE transmits Msgl using a preamble allocated to a specific type within the corresponding resource, the base station may identify that the UE is the eRedCap UE and may identify which type of eRedCap UE it is.

As an embodiment of the disclosure, the UE may indicate to the base station whether the UE is the eRedCap UE, with Msg3 during the random access process. The UE may indicate this by transmitting Msg3 using a logical channel ID (LCID) allocated to eRedCap. Here, the LCID may be defined according to a size of a common control channel (CCCH). For example, LCID 1 may be defined for the eRedCap UE that transmits a 48-bit CCCH, and LCID 2 may be defined for the eRedCap UE that transmits a 64-bit CCCH. When transmitting the 48-bit CCCH, the eRedCap UE may transmit Msg3 by setting LCID 1. When transmitting the 64-bit CCCH, the eRedCap UE may transmit Msg3 by setting LCID 2.

As an embodiment of the disclosure, separate LCID may be defined according to the type of the eRedCap UE. For example, LCID 1 may be defied for the type 1 eRedCap UE, LCID 2 may be defined for the type 2 eRedCap UE, and LCID 3 may be defined for the type 3 eRedCap UE. The type 1 eRedCap UE may set LCID 1 to Msg3 when transmitting Msg3, the type 2 eRedCap UE may set LCID 2 to Msg3 when transmitting Msg3, and the type 3 eRedCap UE may set LCID 3 to Msg3 when transmitting Msg3.

As an embodiment of the disclosure, a separate LCID may be defined according to the type of the eRedCap type and CCCH size. For example, LCID 1 may be defined for 48-bit CCCH transmission of the type 1 eRedCap UE, LCID 2 may be defined for 48-bit CCCH transmission of the type 2 eRedCap UE, LCID 3 may be defined for 48-bit CCCH transmission of the type 3 eRedCap UE, LCID 4 may be defined for 64-bit CCCH transmission of the type 1 eRedCap UE, LCID 5 may be defined for 64-bit CCCH transmission of the type 2 eRedCap UE, and LCID 6 may be defined for 64-bit CCCH transmission of the type 3 eRedCap UE. The type 1 eRedCap UE may set LCID 1 to Msg 3 when transmitting the 48-bit CCCH, the type 2 eRedCap UE may set LCID 2 to corresponding Msg 3 when transmitting the 48-bit CCCH, the type 3 eRedCap UE may set LCID 3 to corresponding Msg 3 when transmitting the 48 bit CCCH, the type 1 eRedCap UE may set LCID 4 to corresponding Msg 3 when transmitting the 64-bit CCCH, the type 2 eRedCap UE may set LCID 5 to corresponding Msg 3 when transmitting the 64-bit CCCH, and the type 3 eRedCap UE may set LCID 6 to corresponding Msg3 when transmitting the 64-bit CCCH.

As an embodiment of the disclosure, intra frequency reselection indication (IFRI) may be defined for each eRedCap type. For example, if SIB includes type 1 IFRI, it may indicate that the corresponding cell or base station supports the type 1 eRedCap UE. In this case, the type 1 IFRI may be indicated as "allowed" or "notAllowed", and the type 1 eRedCap UE may determine whether cell (re)selection for an intra-frequency cell is allowed or not allowed when the corresponding cell is set to barred based on the value and may determine whether to perform cell (re)selection for the intra-frequency cell. Similarly, if the SIB includes type 2 IFRI, it may indicate that the corresponding cell or base station supports the type 2 eRedCap UE. In this case, type 2 IFRI may be indicated as "allowed" or "notAllowed", and the type 2 eRedCap UE may determine whether cell (re)selection for the intra-frequency cell is allowed or not allowed when the corresponding cell is set to barred based on the value and may determine whether to perform cell (re)selection for the intra-frequency cell. Similarly, if the SIB includes type 3 IFRI, it may indicate that the corresponding cell or base station supports the type 3 eRedCap UE. In this case, type 3 IFRI may be indicated as "allowed" or "notAllowed", and the type 3 eRedCap UE may determine whether cell (re)selection for the intra-frequency cell is allowed or not allowed when the corresponding cell is set to barred based on the value and may determine whether to perform cell (re)selection for the intra-frequency cell.

As an embodiment of the present invention, a barring indicator may be defined by eRedCap type in SIB. For example, if the base station includes an eRedCap barring indicator for type 1 or indicates it as barred in SIB1, the type 1 eRedCap UE may determine that the corresponding cell is set to barred and may perform an operation according thereto. If the base station omits the eRedCap barring indicator for type 1 or indicates it as notBarred in SIB1, the type 1 eRedCap UE may determine that the corresponding cell is not set to barred and may perform an operation according thereto. Similarly, if the base station includes an eRedCap barring indicator for type 2 or indicates it as barred in SIB1, the type 2 eRedCap UE may determine that the corresponding cell is set to barred and may perform an operation according thereto. If the base station omits the eRedCap barring indicator for type 2 or indicates it as notBarred in SIB1, the type 2 eRedCap UE may determine that the corresponding cell is not set to barred and may perform an operation according thereto. Similarly, if the base station includes an eRedCap barring indicator for type 3 or indicates it as barred in SIB1, the type 3 eRedCap UE may determine that the corresponding cell is set to barred and may perform an operation according thereto. If the base station omits the eRedCap barring indicator for type 3 or indicates it as notBarred in SIB1, the type 3 eRedCap UE may determine that the corresponding cell is not set to barred and may perform an operation according thereto.

As an embodiment of the present invention, an indicator may be defined in SIB4 to indicate whether each eRedCap type is allowed for each inter-frequency. For example, when an eRedCap indicator for type 1 is included or set to true for specific inter-frequency, it may indicate that the eRedCap UE for type 1 is allowed on the corresponding inter-frequency. Conversely, when the eRedCap indicator for type 1 is omitted or set to false for the specific inter-frequency, it may indicate that the eRedCap UE for type 1 is not allowed on the corresponding inter-frequency. Similarly, for example, when the eRedCap indicator for type 2 is included or set to true for the specific inter-frequency, it may indicate that the eRedCap UE for type 2 is allowed on the corresponding inter-frequency. Conversely, when the eRedCap indicator for type 2 is omitted or set to false for the specific inter-frequency, it may indicate that the eRedCap UE for type 2 is not allowed on the corresponding inter-frequency. Similarly, for example, when the eRedCap indicator for type 3 is included or set to true for the specific inter-frequency, it may indicate that the eRedCap UE for type 3 is allowed on the corresponding inter-frequency. Conversely, when the eRedCap indicator for type 3 is omitted or set to false for the specific inter-frequency, it may indicate that the eRedCap UE for type 3 is not allowed on the corresponding inter-frequency.

As an embodiment of the disclosure, the eRedCap UE may report its eRedCap type to the base station through a UE capability message. To this end, a type-by-type eRedCap indicator may be defined within the UE capability message. For example, if the UE is the type 1 eRedCap UE, the eRedCap indicator for type 1 may be included in the UE capability message or may be set to true. Conversely, if the UE is not the type 1 eRedCap UE, the eRedCap indicator for type 1 may be omitted in the UE capability message or may be set to false. Similarly, for example, if the UE is the type 2 eRedCap UE, the eRedCap indicator for type 2 may be included in the UE capability message or may be set to true. Conversely, if the UE is not the type 2 eRedCap UE, the eRedCap indicator for type 2 may be omitted in the UE capability message or may be set to false. Similarly, if the UE is the type 3 eRedCap UE, the eRedCap indicator for type 3 may be included in the UE capability message or may be set to true. Conversely, if the UE is not the type 3 eRedCap UE, the eRedCap indicator for type 3 may be omitted in the UE capability message or may be set to false.

Meanwhile, although not illustrated, the base station that receives information on the eRedCap type of the corresponding UE from the eRedCap UE may perform RRC configuration (e.g., BWP configuration) based on capability of the eRedCap UE (e.g., in the case of reduced/limited baseband bandwidth) when the eRedCap UE is in an initial access stage.

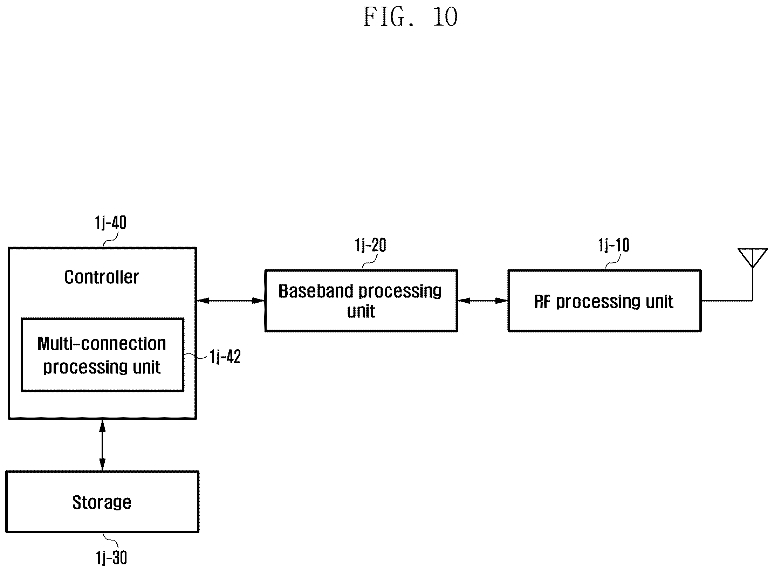

FIG. 10 is a block diagram illustrating an internal structure of a UE applied to examples of the disclosure.

With reference to FIG. 10, the UE includes a radio frequency (RF) processing unit 1j-10, a baseband processing unit 1j-20, a storage 1j-30, and a controller 1j-40.

The RF processing unit 1j-10 functions to transmit and receive signals through a wireless channel, such as band conversion and amplification of a signal. That is, the RF processing unit 1j-10 up-converts a baseband signal provided from the baseband processing unit 1j-20 to an RF band signal and transmits the same through an antenna, and down-converts an RF band signal received through the antenna to a baseband signal. For example, the RF processing unit 1j-10 may include a Tx filter, an Rx filter, an amplifier, a mixer, an oscillator, a digital to analog convertor (DAC), and an analog to digital convertor (ADC). In the drawing, only a single antenna is illustrated, but the UE may include a plurality of antennas. Also, the RF processing unit 1j-10 may include a plurality of RF chains. Further, the RF processing unit 1j-10 may perform beamforming. For the beamforming, the RF processing unit 1j-10 may adjust the phase and magnitude of each of signals transmitted and received through the plurality of antennas or antenna elements. Also, the RF processing unit may perform MIMO, and may receive a plurality of layers when performing a MIMO operation.

The baseband processing unit 1j-20 performs a conversation function between a baseband signal and a bitstream according to physical layer specifications of the system. For example, when transmitting data, the baseband processing unit 1j-20 generates complex symbols by encoding and modulating a transmission bitstream. Also, when receiving data, the baseband processing unit 1j-20 restores a received bitstream by demodulating and decoding a baseband signal provided from the RF processing unit 1j-10. For example, in the case of following an orthogonal frequency division multiplexing (OFDM) scheme, when transmitting data, the baseband processing unit 1j-20 generates complex symbols by encoding and modulating the transmission bitstream, maps the complex symbols to subcarriers, and then configures OFDM symbols through inverse fast Fourier transform (IFFT) operation and cyclic prefix (CP) insertion. Also, when receiving data, the baseband processing unit 1j-20 divides a baseband signal provided from the RF processing unit 1j-10 into OFDM symbol units, restores signals mapped to subcarriers through a fast Fourier transform (FFT) operation, and then restores a received bitstream through demodulation and decoding.

The baseband processing unit 1j-20 and the RF processing unit 1j-10 transmit and receive signals as described above. Therefore, the baseband processing unit 1j-20 and the RF processing unit 1j-10 may be referred to as a transmitter, a receiver, a transceiver, or a communication unit. Further, at least one of the baseband processing unit 1j-20 and the RF processing unit 1j-10 may include a plurality of communication modules to support a plurality of different radio access technologies. Also, at least one of the baseband processing unit 1j-20 and the RF processing unit 1j-10 may include different communication modules to process signals of different frequency bands. For example, the different radio access technologies may include a wireless local area network (WLAN) (e.g., IEEE 802.11), a cellular network (e.g., LTE), and the like. Also, the different frequency bands may include a super-high frequency (SHF) (e.g., 2.NRhz, NRhz) band and a millimeter wave (e.g., 60 GHz) band.

The storage 1j-30 stores data, such as a basic program, an application program, and configuration information for the operation of the UE. In particular, the storage 1j-30 may store information related to a second access node that performs wireless communication using radio access technology. And, the storage 1j-30 provides the stored data upon request from the controller 1j-40.

The controller 1j-40 controls the overall operations of the UE. For example, the controller 1j-40 transmits and receives signals through the baseband processing unit 1j-20 and the RF processing unit 1j-10. Also, the controller 1j-40 writes and reads data to and from the storage 1j-30. To this end, the controller 1j-40 may include at least one processor. For example, the controller 1j-40 may include a communication processor (CP) that performs control for communication and an application processor (AP) that controls an upper layer, such as an application program, and may include a multi-connection processing unit 1j-42 as illustrated in the drawing.

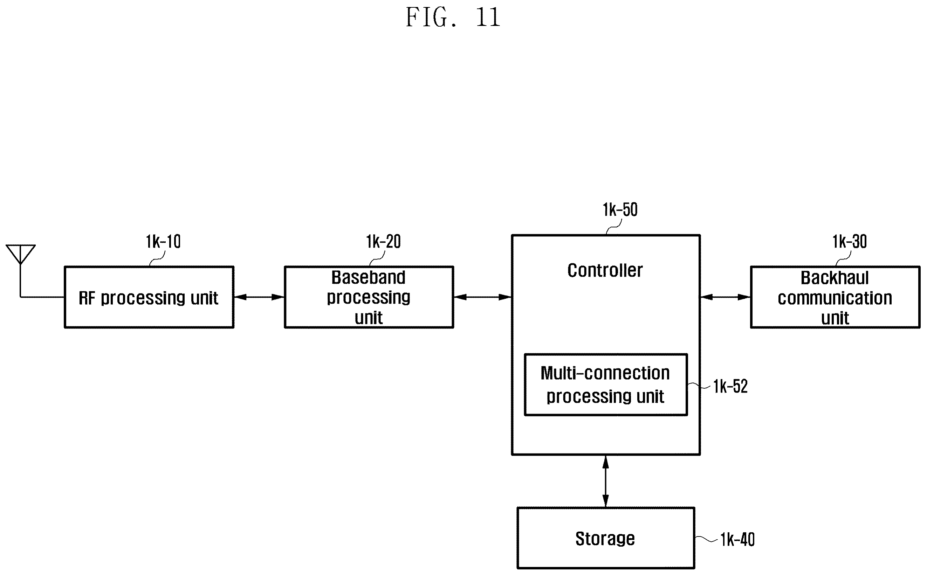

FIG. 11 is a block diagram illustrating a structure of a base station applied to examples of the disclosure.

With reference to FIG. 11, the base station according to an example of the disclosure is configured to include an RF processing unit 1k-10, a baseband processing unit 1k-20, a backhaul communication unit 1k-30, a storage 1k-40, and a controller 1k-50.

the RF processing unit 1k-10 functions to transmit and receive signals through a wireless channel, such as band conversion and amplification of a signal. That is, the RF processing unit 1k-10 up-converts a baseband signal provided from the baseband processing unit 1k-20 to an RF band signal and transmits the same through an antenna, and down-converts an RF band signal received through the antenna to a baseband signal. For example, the RF processing unit 1k-10 may include a Tx filter, an Rx filter, an amplifier, a mixer, an oscillator, a DAC, and an ADC. In the drawing, only a single antenna is illustrated, but the base station may include a plurality of antennas. Also, the RF processing unit 1k-10 may include a plurality of RF chains. Further, the RF processing unit 1k-10 may perform beamforming. For the beamforming, the RF processing unit 1k-10 may adjust the phase and magnitude of each of signals transmitted and received through the plurality of antennas or antenna elements. The RF processing unit may perform a downward MIMO operation by transmitting at least one layer.

The baseband processing unit 1k-20 performs a conversion function between a baseband signal and a bitstream according to physical layer specifications of radio access technology. For example, when transmitting data, the baseband processing unit 1k-20 generates complex symbols by encoding and modulating a transmission bitstream. Also, when receiving data, the baseband processing unit 1k-20 restores a received bitstream by demodulating and decoding a baseband signal provided from the RF processing unit 1k-10. For example, in the case of following an OFDM scheme, when transmitting data, the baseband processing unit 1k-20 generates complex symbols by encoding and modulating the transmission bitstream, maps the complex symbols to subcarriers, and then configures OFDM symbols through an IFFT operation and CP insertion. Also, when receiving data, the baseband processing unit 1k-20 divides a baseband signal provided from the RF processing unit 1k-10 into OFDM symbol units, restores signals mapped to subcarriers through an FFT operation, and then restores a received bitstream through demodulation and decoding. The baseband processing unit 1k-20 and the RF processing unit 1k-10 transmit and receive signals as described above. Therefore, the baseband processing unit 1k-20 and the RF processing unit 1k-10 may be referred to as a transmitter, a receiver, a transceiver, a communication unit, or a wireless communication unit.

The backhaul communication unit 1k-30 provides an interface for communicating with other nodes within a network. That is, the backhaul communication unit 1k-30 converts a bitstream from the main base station to another node, for example, an auxiliary base station and a core network, and converts a physical signal received from the other node to a bitstream.

The storage 1k-40 stores data, such as a basic program, an application program, and configuration information for the operation of the main base station. In particular, the storage 1k-40 may store information on a bearer allocated to a connected UE and measurement results reported from the connected UE. Also, the storage 1k-40 may store information that serves as a determination criterion for whether to provide multiple connections to the UE or whether to terminate them. And, the storage 1k-40 provides stored data upon request from the controller 1k-50.

The controller 1k-50 controls the overall operations of the main base station. For example, the controller 1k-50 transmits and receives signals through the baseband processing unit 1k-20 and the RF processing unit 1k-10 or through the backhaul communication unit 1k-30. Also, the controller 1k-50 writes and reads data to and from the storage 1k-40. To this end, the controller 1k-50 may include at least one processor, and as illustrated in the drawing, may include a multi-connection processing unit 1k-52. Meanwhile, embodiments of the disclosure disclosed in the present specification and drawings are only specific examples presented to easily explain the technical contents of the disclosure and to help understanding of the disclosure, and are not construed as limiting the scope of the disclosure. That is, it will be apparent to those skilled in the art to which the disclosure pertains that other modified examples based on the technical spirit of the disclosure are possible. Also, each of the embodiments may be combined and operated as needed. For example, a base station and a UE may be operated through combination of some portions of an embodiment of the disclosure and another embodiment. Also, embodiments of the disclosure may be applied to other communication systems, and other modifications based on the technical spirit of the embodiment may also be implemented. For example, the embodiments may be applied to LTE systems, 5G, NR systems, or 6G systems. Therefore, the scope of the disclosure should not be limited to the described embodiments, but should be defined not only by the scope of the claims but also equivalents thereof.

**Claims**

1. A method performed by a terminal in a wireless communication system, the method comprising:

   receiving, from a master cell group (MCG) or a secondary cell group (SCG) configured with dual connectivity (DC) for the UE, a radio resource control (RRC) message including configuration information on an application layer measurement, wherein the configuration information includes first information on an identity (ID) for identifying each of a plurality of quality of experience (QoE) measurements and second information on a signaling radio bearer (SRB) to transmit a QoE report of a measurement corresponding to each ID, and the second information indicates an SRB 4 for the MCG or an SRB 5 for the SCG;
   performing a report for the plurality of QoE measurements based on the configuration information;
   receiving, from the MCG, information indicating a release of the SCG; and
   discarding at least one QoE report that has not been transmitted among QoE reports generated for the plurality of QoE measurements, based on the release of the SCG,
   wherein the at least one QoE report is configured to be transmitted through the SRB 5.

2. The method of claim 1,

   wherein the configuration information includes a QoE measurement configuration configured by the MCG and a QoE measurement configuration configured by the SCG, and
   wherein the at least one QoE report includes a QoE report corresponding to the QoE measurement configuration configured by the MCG.

3. The method of claim 1, further comprising:
   releasing a QoE measurement configuration configured by the SCG from the configuration information, based on the release of the SCG.

4. The method of claim 3, further comprising:
   discarding a QoE report corresponding to the QoE measurement configuration configured by the SCG among the generated QoE reports, based on the release of the SCG.

5. The method of claim 1,

   wherein each of at least one QoE measurement among the plurality of QoE measurements is configured to transmit a report for a QoE measurement and a report for an RAN visible QoE (RVQoE) measurement, based on the configuration information, and
   wherein the at least one QoE report includes the report for the RVQoE measurement.

6. The method of claim 1, wherein performing the report for the plurality of QoE measurements based on the configuration information comprises:

   obtaining, from an upper layer in an access stratum (AS) of the terminal, a value of a QoE report for a QoE measurement;

generating a measurement report message including the value of the QoE report and an ID corresponding to the QoE measurement; and
transmitting the measurement report message via an SRB configured to transmit the QoE report.

7. The method of claim 1, further comprising:

transmitting, to the MCG, capability information indicating whether to support a QoE measurement corresponding to a service type,
wherein the service type includes at least one of streaming, multimedia telephony service for internet protocol multimedia subsystem (IMS) (MTSI), and virtual reality (VR).

8. A terminal in a wireless communication system, the terminal comprising:

a transceiver; and
a controller configured to:

control the transceiver to receive, from a master cell group (MCG) or a secondary cell group (SCG) configured with dual connectivity (DC) for the UE, a radio resource control (RRC) message including configuration information on an application layer measurement, wherein the configuration information includes first information on an identity (ID) for identifying each of a plurality of quality of experience (QoE) measurements and second information on a signaling radio bearer (SRB) to transmit a QoE report of a measurement corresponding to each ID, and the second information indicates an SRB 4 for the MCG or an SRB 5 for the SCG;
perform a report for the plurality of QoE measurements based on the configuration information;
control the transceiver to receive, from the MCG, information indicating a release of the SCG, and
discard at least one QoE report that has not been transmitted among QoE reports generated for the plurality of QoE measurements, based on the release of the SCG,

wherein the at least one QoE report is configured to be transmitted through the SRB 5.

9. The terminal of claim 8,

wherein the configuration information includes a QoE measurement configuration configured by the MCG and a QoE measurement configuration configured by the SCG, and
wherein the at least one QoE report includes a QoE report corresponding to the QoE measurement configuration configured by the MCG.

10. The terminal of claim 8,
wherein the controller is configured to release a QoE measurement configuration configured by the SCG from the configuration information, based on the release of the SCG.

11. The terminal of claim 10,
wherein the controller is configured to discard a QoE report corresponding to the QoE measurement configuration configured by the SCG among the generated QoE reports, based on the release of the SCG.

12. The terminal of claim 8,

wherein each of at least one QoE measurement among the plurality of QoE measurements is configured to transmit a report for a QoE measurement and a report for an RAN visible QoE (RVQoE) measurement, based on the configuration information, and
wherein the at least one QoE report includes the report for the RVQoE measurement.

13. The terminal of claim 8, wherein the controller is configured to:

obtain, from an upper layer in an access stratum (AS) of the terminal, a value of a QoE report for a QoE measurement,
generate a measurement report message including the value of the QoE report and an ID corresponding to the QoE measurement, and

control the transceiver to transmit the measurement report message via an SRB configured to transmit the QoE report.

14. The terminal of claim 8,

wherein the controller is configured to control the transceiver to transmit, to the MCG, capability information indicating whether to support a QoE measurement corresponding to a service type, and
wherein the service type includes at least one of streaming, multimedia telephony service for internet protocol multimedia subsystem (IMS) (MTSI), and virtual reality (VR).

EP 4 679 883 A1

# FIG. 1

# FIG. 2

1b-05 — NR RRC_CONNECTED

1b-10 — Release including resume/suspend configuration

1b-15 — NR RRC_INACTIVE

Establishment/release — 1b-25

1b-20 — Release

1b-30 — NR RRC_IDLE

# FIG. 3

| 1c-65 | 1c-20 | 1c-25 | 1c-15 | 1c-05 | 1c-45 |
|-------|-------|-------|-------|-------|-------|
| TCE/MCE | OAM | CN | NG-RAN | UE AS | UE APP |

1c-10 — Capability information

**Configure QoE measurement**
1c-30 — QoE measurement configuration information

**Activate QoE measurement**
1c-35 — QoE measurement configuration information

**RRC message**
1c-40 — QoE measurement configuration information

**AT Command**
1c-50 — QoE measurement configuration information

**AT Command**
QoE report
1c-55 —

**RRC message**
QoE report
1c-60 —

QoE report
1c-70 —

EP 4 679 883 A1

FIG. 4

| TCE/MCE | OAM | NG-RAN | UE AS | UE APP |
|---------|-----|--------|-------|--------|

1d-05 (OAM)
1d-10 (NG-RAN)

Capability information

Activate QoE measurement
1d-15 — QoE measurement configuration information

RRC message
1d-20 — QoE measurement configuration information

AT Command
QoE measurement configuration information

AT Command
QoE report

RRC message
QoE report

QoE report

# FIG. 5

| NG-RAN | UE AS | UE APP |
|---|---|---|

**Capability information**
1e-05

**RRC message**
QoE measurement configuration information and/or
RVQoE configuration information
1e-10

**AT Command**
QoE measurement configuration information and/or
RVQoE configuration information
1e-15

**AT Command**
QoE report and/or RVQoE report
1e-20

**RRC message**
QoE report and/or RVQoE report
1e-25

# FIG. 6

1f-10

gNB

RRC

PDCP

RLC

MAC

PHY

SRB 0/1/2
SRB 4

UE

1f-05

# FIG. 7

FIG. 8

FIG. 9

1i-01

UE

1i-03

NB

Random access preamble #N

1i-11

1i-23

RAR window

Random access response to #N
(indicated as RA-RNTI in PDCCH)

1i-21

Scheduled transmission

1i-31

Contention resolution

1i-41

FIG. 10

EP 4 679 883 A1

FIG. 11

# EP 4 679 883 A1

## INTERNATIONAL SEARCH REPORT

| International application No. |
|---|
| **PCT/KR2024/005946** |

### A. CLASSIFICATION OF SUBJECT MATTER

**H04W 24/10**(2009.01)i; **H04L 41/5067**(2022.01)i; **H04W 8/24**(2009.01)i; **H04W 76/15**(2018.01)i

According to International Patent Classification (IPC) or to both national classification and IPC

### B. FIELDS SEARCHED

Minimum documentation searched (classification system followed by classification symbols)

H04W 24/10(2009.01); H04L 41/5067(2022.01); H04W 28/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MCG, SRB4, SCG, SRB5, measurement ID, QoE measurement configuration, SCG release, discard, QoE report

### C. DOCUMENTS CONSIDERED TO BE RELEVANT

| Category* | Citation of document, with indication, where appropriate, of the relevant passages | Relevant to claim No. |
|---|---|---|
| A | ERICSSON. Running CR for QoE enhancements in NR. R2-2303676, 3GPP TSG-RAN WG2 Meeting #121bis-e. 07 April 2023. See pages 65, 99 and 260. | 1-14 |
| A | CHINA UNICOM. Discussion on QoE configuration and reporting for NR-DC. R2-2304085, 3GPP TSG-RAN WG2 Meeting #121bis-e. 07 April 2023. See sections 2-2.3; and figure 2. | 1-14 |
| A | HUAWEI et al. Discussion on QoE measurements in NR-DC. R2-2303598, 3GPP TSG-RAN WG2 Meeting #121bis-e. 07 April 2023. See sections 2-2.1.5. | 1-14 |
| A | US 2023-0115085 A1 (HUAWEI TECHNOLOGIES CO., LTD.) 13 April 2023 (2023-04-13) See paragraphs [0106]-[0179]; and figures 2A-3. | 1-14 |
| A | WO 2022-005376 A1 (TELEFONAKTIEBOLAGET LM ERICSSON (PUBL)) 06 January 2022 (2022-01-06) See pages 5-20 and 26-36; and figures 10-18B. | 1-14 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2024** | **02 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005946**

| Patent document cited in search report | | | Publication date (day/month/year) | Patent family member(s) | | | Publication date (day/month/year) |
|---|---|---|---|---|---|---|---|
| US | 2023-0115085 | A1 | 13 April 2023 | AU | 2020-103437 | A4 | 28 January 2021 |
| | | | | CN | 111208427 | A | 29 May 2020 |
| | | | | CN | 111208427 | B | 24 July 2020 |
| | | | | CN | 111491441 | A | 04 August 2020 |
| | | | | CN | 111491441 | B | 26 October 2021 |
| | | | | CN | 111538539 | A | 14 August 2020 |
| | | | | CN | 111538539 | B | 22 July 2022 |
| | | | | CN | 113553600 | A | 26 October 2021 |
| | | | | CN | 113554658 | A | 26 October 2021 |
| | | | | CN | 113556776 | A | 26 October 2021 |
| | | | | EP | 4113138 | A1 | 04 January 2023 |
| | | | | EP | 4113138 | B1 | 13 March 2024 |
| | | | | EP | 4131045 | A1 | 08 February 2023 |
| | | | | EP | 4132081 | A1 | 08 February 2023 |
| | | | | JP | 2023-513726 | A | 03 April 2023 |
| | | | | US | 11706868 | B2 | 18 July 2023 |
| | | | | US | 11768736 | B2 | 26 September 2023 |
| | | | | US | 2022-0383508 | A1 | 01 December 2022 |
| | | | | US | 2022-0386449 | A1 | 01 December 2022 |
| | | | | US | 2023-0117996 | A1 | 20 April 2023 |
| | | | | US | 2023-0208850 | A1 | 29 June 2023 |
| | | | | WO | 2021-212665 | A1 | 28 October 2021 |
| | | | | WO | 2021-212735 | A1 | 28 October 2021 |
| | | | | WO | 2021-212808 | A1 | 28 October 2021 |
| | | | | WO | 2021-212810 | A1 | 28 October 2021 |
| | | | | WO | 2021-212833 | A1 | 28 October 2021 |
| | | | | WO | 2021-212948 | A1 | 28 October 2021 |
| | | | | WO | 2021-213061 | A1 | 28 October 2021 |
| | | | | WO | 2021-213142 | A1 | 28 October 2021 |
| | | | | WO | 2021-213283 | A1 | 28 October 2021 |
| | | | | WO | 2021-213481 | A1 | 28 October 2021 |
| WO | 2022-005376 | A1 | 06 January 2022 | EP | 4176616 | A1 | 10 May 2023 |
| | | | | US | 2023-0319616 | A1 | 05 October 2023 |

Form PCT/ISA/210 (patent family annex) (July 2022)